# EUROPEAN PATENT APPLICATION

(11) **EP 2 717 584 A1**
(43) Date of publication of application: **09.04.2014**
(21) Application number: 12789388.1
(22) Date of filing: 17.05.2012
(51) Int. Cl.: H04N 13/04, G02B 27/22

(54) **DISPLAY DEVICE AND METHOD, AND PROGRAM**

(30) Priority: 26.05.2011 JP 2011117648
(71) Applicant: Sony Corporation, Tokyo 108-0075 (JP)
(72) Inventor: TSURUMI Shingo, Tokyo 108-0075 (JP); YAMASHITA Noriyuki, Tokyo 108-0075 (JP); IGARASHI Masaya, Tokyo 108-0075 (JP)
(74) Representative: Horner, David Richard
(86) International application number: PCT/JP2012/062636
(87) International publication number: WO 2012/161075

(57) **Abstract**

The present technology relates to a display device, a method, and a program for allowing a high quality stereoscopic image to be presented more easily. A display unit is a display device for four viewpoints, including a parallax barrier, and a plurality of block regions, each including pixels in channels CH0 to CH3 arranged in a parallax direction, are arranged on the display unit in the parallax direction. An assignment control unit assigns a parallax image for a left eye or for a right eye to a pixel in each channel in a block region according to the viewpoint position of a user. For example, the same parallax image is assigned to pixels in two different channels that are adjacent to each other in the parallax direction. A generation unit generates a combined image by combining parallax images for a left eye and for a right eye according to the assignment by the assignment control unit, and causes the combined image to be stereoscopically displayed on the displayunit. The present inventionmaybe applied to a display device.

## Description

### TECHNICAL FIELD

The present technology relates to a display device, a method, and a program, and more particularly, to a display device, a method, and a program for performing stereoscopic display of an image according to an autostereoscopic method, by using a parallax separation unit such as a parallax barrier or the like.

### BACKGROUND ART

For example, as methods of displaying a stereoscopic image, there are known a glass method that uses glasses for stereoscopic viewing, and an autostereoscopic method that enables stereoscopic viewing with naked eyes without using special glasses for stereoscopic viewing.

Typically, the glass method is a shutter glass method that uses shutter glasses including a shutter for a left eye and a shutter for a right eye. According to the shutter glass method, parallax images for a left eye and a right eye are alternately displayed on a two-dimensional panel in a frame sequential manner and at a high speed. Then, with switching between the shutter for a left eye and the shutter for a right eye being performed according to the display timing of each parallax image, only the parallax image for a left eye enters the left eye of an observer and only the parallax image for a right eye enters the right eye of the observer, thereby enabling stereoscopic viewing of the image.

On the other hand, the autostereoscopicmethod typically includes a parallax barrier method and a lenticular lens method. In the case of the parallax barrier method and the lenticular lens method, a parallax image for stereoscopic viewing (a parallax image for a right eye and for a parallax image for a left eye in the case of two viewpoints) is spatially divided and displayed on a two-dimensional display panel, and the parallax image is subjected to parallax separation in a horizontal direction by a parallax separation unit, and stereoscopic viewing is realized. At this time, in the parallax barrier method, a parallax barrier having a slit opening is used as the parallax separation unit, and in the lenticular lens method, a lenticular lens with a plurality of cylindrical split lenses that are arranged in parallel is used as the parallax separation unit.

Furthermore, as a display device according to the autostereoscopic method, a device enabling the designed preferred viewing distance to be reduced as much as possible by reducing the distance between an image forming surface of a liquid crystal panel and a parallax barrier is proposed (for example, see Patent Document 1).

### CITATION LIST

### PATENT DOCUMENT

Patent Document 1: Japanese Patent Application Laid-Open No. 9-50019

### SUMMARY OF THE INVENTION

### PROBLEMS TO BE SOLVED BY THE INVENTION

However, with the autostereoscopic method that uses a parallax separation unit, cross talk where left and right parallax images are observed by one eye of a user tends to occur when the viewpoint position of the user changes, and a high-quality stereoscopic image cannot be stably displayed.

The present technology is made in view of the circumstances, and is for enabling a high-quality stereoscopic image to be more easily presented.

### SOLUTIONS TO PROBLEMS

A display device according to an aspect of the present technology includes a display unit provided with a plurality of block regions including pixels in three or more channels, a separation unit for separating an image displayed in the pixel in each channel in the block region, an assignment control unit for assigning one of a plurality of parallax images to the pixel in each channel in the block region according to a viewpoint position of a user observing the display unit, such that a parallax image is displayed in a first region including a plurality of pixels that are adjacent to one another in the block region, the pixels being in two or more different channels, and such that another parallax image having a parallax to the parallax image is displayed in a second region in the block region, the second region being different from the first region, and a generation unit for generating a combined image by combining a plurality of parallax images according to assignment by the assignment control unit.

The plurality of parallax images are the parallax image for a right eye and the parallax image for a left eye.

In a case the user observes the display unit from a predetermined viewpoint position, a pixel in a different channel is observed depending on the block region.

The assignment control unit may include a viewing position calculation unit for obtaining, for each block region, a viewing position on a viewing pixel in the block region observed by the user, based on the viewpoint position, and a boundary position calculation unit for calculating, as a boundary position, a position of the block region where the viewing position is substantially at a center of the viewing pixel, and for assigning, with respect to block regions present between the boundary position and another boundary position closest to the boundary position, a same parallax image to pixels in a same channel in the block regions.

The boundary position calculation unit may assign, with respect to the block regions present between the boundary position and the other boundary position, the same parallax image to pixels in a channel of the viewing pixel in the block region at the boundary position and in a channel, same as the channel of the viewing pixel, in the block region at the other boundary position.

The boundary position calculation unit takes a middle position of the boundary position calculated based on a right eye of the user and the boundary position calculated based on a left eye of the user as a final boundary position.

In a case the viewpoint position is outside a predetermined region, the assignment control unit causes the display unit to display one of the parallax images for a right eye and for a left eye.

A display method or a program according to an aspect of the present technology includes assigning one of a plurality of parallax images to a pixel in each channel in a block region according to a viewpoint position of a user observing a display unit, such that a parallax image is displayed in a first region including a plurality of pixels that are adj acent to one another in the block region, the pixels being in two or more different channels, and such that another parallax image having a parallax to the parallax image is displayed in a second region in the block region, the second region being different from the first region, and generating a combined image by combining a plurality of parallax images according to the assigning.

According to an aspect of the present technology, one of a plurality of parallax images is assigned to a pixel in each channel in a block region according to a viewpoint position of a user observing a display unit, such that a parallax image is displayed in a first region including a plurality of pixels that are adj acent to one another in the block region, the pixels being in two or more different channels, and such that another parallax image having a parallax to the parallax image is displayed in a second region in the block region, the second region being different from the first region, and a combined image is generated by combining a plurality of parallax images according to the assigning.

### EFFECTS OF THE INVENTION

According to an aspect of the present technology, a high-quality stereoscopic image may be more easily presented.

### BRIEF DESCRIPTION OF DRAWINGS

Fig. 1 is a diagram showing an example configuration of an embodiment of a display device.
Fig. 2 is a diagram showing a more detailed example configuration of a display unit.
Fig. 3 is a diagram for describing stereoscopic display of a 4-viewpoint parallax image.
Fig. 4 is a diagram for describing the design of each part of an opening portion.
Fig. 5 is a diagram for describing viewing from half a preferred viewing distance.
Fig. 6 is a diagram for describing a channel of a pixel that is observed by a user.
Fig. 7 is a diagram for describing assignment of a parallax image to each channel.
Fig. 8 is a diagram for describing a boundary position of a continuous block region.
Fig. 9 is a diagram for describing calculation of a viewing position.
Fig. 10 is a diagram for describing calculation of a viewing position.
Fig. 11 is a diagram for describing assignment of a parallax image.
Fig. 12 is a diagram for describing calculation of a boundary position.
Fig. 13 is a diagram for describing a viewpoint position where stereoscopic display is not possible.
Fig. 14 is a diagram for describing a region where stereoscopic display is possible.
Fig. 15 is a flow chart for describing a display process.
Fig. 16 is a diagram for describing assignment of a parallax image.
Fig. 17 is a diagram showing an example configuration of a display system.
Fig. 18 is a diagram for describing assignment of a parallax image on a 6-viewpoing display unit.
Fig. 19 is a diagram showing an example configuration of a computer.

### MODE FOR CARRYING OUT THE INVENTION

Hereinafter, an embodiment adopting the present technology will be described with reference to the drawings.

### <First Embodiment>

### (Example Configuration of Display Device)

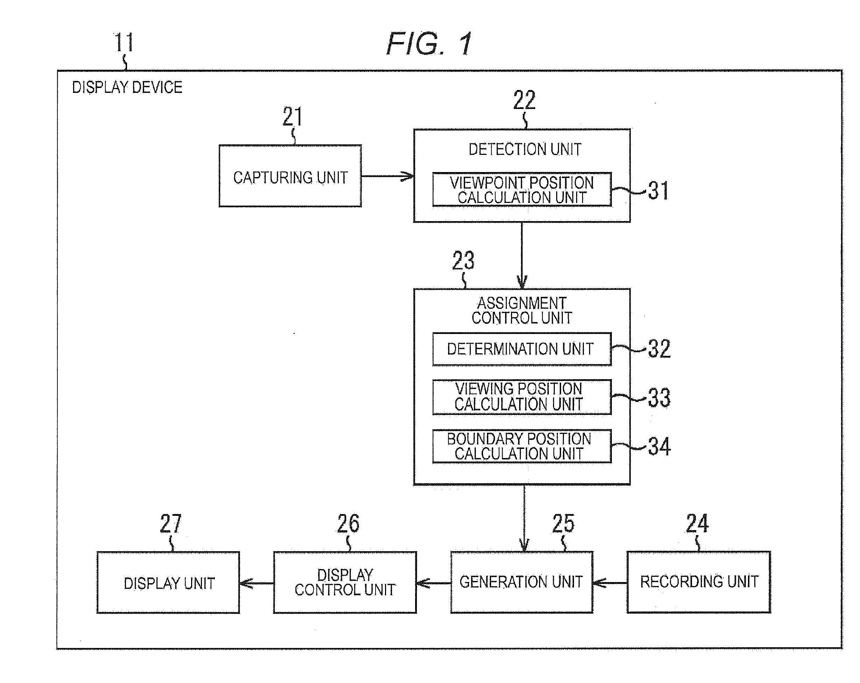

Fig. 1 is a diagram showing an example configuration of an embodiment of a display device adopting the present technology.

A display device 11 is a display device for stereoscopically displaying a subject using a multiple-viewpoint parallax image. The display device 11 is configured from a capturing unit 21, a detection unit 22, an assignment control unit 23, a recording unit 24, a generation unit 25, a display control unit 26, and a display unit 27.

The capturing unit 21 captures an image of a user in the periphery of the display device 11 (hereinafter, referred to a peripheral image), for example, an image of a user observing an image displayed on the display unit 27 while almost completely facing the display unit 27, and supplies the image to the detection unit 22.

The detection unit 22 detects the eyes of the user from the peripheral image supplied by the capturing unit 21, and supplies the detection result to the assignment control unit 23. Also, the detection unit 22 includes a viewpoint position calculation unit 31, and the viewpoint position calculation unit 31 calculates the viewpoint position of the user with respect to the display unit 27, based on the peripheral image, and supplies the viewpoint position to the assignment control unit 23.

The assignment control unit 23 assigns a plurality of parallax images to respective regions on the display surface of the display unit 27, based on the detection result and the viewpoint position of the user from the detection unit 22. The assignment control unit 23 includes a determination unit 32, a viewing position calculation unit 33, and a boundary position calculation unit 34.

The determination unit 32 determines, based on the viewpoint position from the detection unit 22, whether stereoscopic display (3D display) of a subj ect by the plurality of parallax images is possible, and the assignment control unit 23 controls image generation at the generation unit 25 according to the determination result.

The viewing position calculation unit 33 calculates, based on the viewpoint position from the detection unit 22, the position on the pixel on the display surface of the display unit 27 that is being viewed by the user as a viewing position. The boundary position calculation unit 34 assigns a plurality of parallax images to respective regions on the display surface of the display unit 27 based on the viewing position.

The recording unit 24 has recorded therein a plurality of parallax images constituting a stereoscopic image, and supplies the parallax images to the generation unit 25 as necessary. The generation unit 25 generates a combined image based on the parallax images from the recording unit 24 by spatially dividing and combining the parallax images, under the control of the assignment control unit 23, and supplies the combined image to the display control unit 26. Also, the generation unit 25 supplies one of the parallax images from the recording unit 24 to the display control unit 26 as it is, under the control of the assignment control unit 23.

The display control unit 26 causes a subject of the parallax images to be stereoscopically displayed by supplying the combined image from the generation unit 25 to the display unit 27 and causing the display unit 27 to display the same, or causes the display unit 27 to display the parallax images from the generation unit 25 by supplying the same to the display unit 27. The display unit 27 is a liquid crystal display panel or the like that is capable of displaying a stereoscopic image by the autostereoscopicmethod, and displays the combined image or the parallax images supplied by the display control unit 26.

### (Example Configuration of Display Unit)

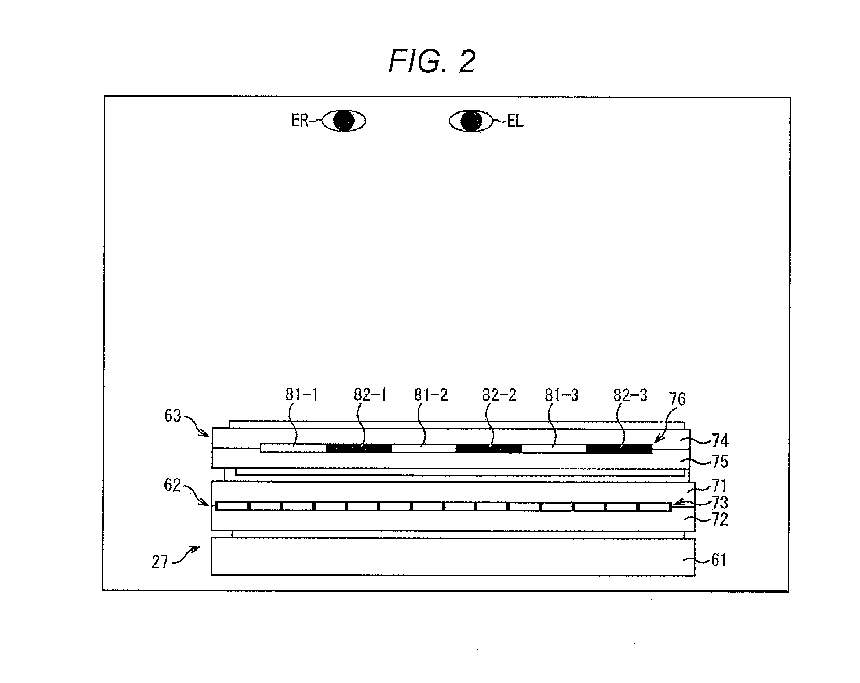

Furthermore, the display unit 27 in Fig. 1 is configured as shown in Fig. 2, for example.

That is, the display unit 27 includes a backlight 61, a light modulation panel 62, and a barrier element 63.

The backlight 61 is configured from an LED (Light Emitting Diode) light source, a light guide plate and the like, for example, and emits light for displaying an image and causes the light to enter the light modulation panel 62.

The light modulation panel 62 is configured from a liquid crystal layer, color filters of respective colors, R, G and B, and the like, for example, and causes an image to be displayed by transmitting the light entering from the backlight 61. At this time, the light modulation panel 62 performs grayscale display of each pixel of an image by changing the transmittance of light for each pixel provided on the light modulation panel 62.

Tobemoreprecise, the lightmodulation panel 62 includes a transparent substrate 71, a transparent substrate 72, and a liquid crystal layer 73, and the liquid crystal layer 73 is formed between the flat transparent substrate 71 and the flat transparent substrate 72 that are arranged facing each other. A transmission portion as a pixel for displaying an image is provided to the liquid crystal layer 73, and when voltage is applied to electrodes of the transparent substrate 71 and the transparent substrate 72 at the time of displaying an image, transmittance of light entering the transmission portion from the backlight 61 is changed according to the applied voltage.

Furthermore, the barrier element 63 is configured from a polarizing plate, a switching liquid crystal layer, and the like, and optically separates the parallax images by blocking a part of light entering from the light modulation panel 62 and transmitting the rest. The barrier element 63 includes a transparent substrate 74, a transparent substrate 75, and a switching liquid crystal layer 76, and the switching liquid crystal layer 76 is formed between the flat transparent substrate 74 and the flat transparent substrate 75 that are arranged facing each other.

Electrodes are formed to the transparent substrate 74 and the transparent substrate 75, and when voltage is applied to some or all of the electrodes, orientation directions of the liquid crystal molecules in the switching liquid crystal layer 76 are changed, and a parallax barrier is thereby formed at the switching liquid crystal layer 76.

In the example in Fig. 2, a parallax barrier including opening portions 81-1 to 81-3 for transmitting light entering from the light modulation panel 62, and blocking portions 82-1 to 82-3 for blocking light entering from the light modulation panel 62 is formed to the switching liquid crystal layer 76.

Additionally, in the following, if the opening portions 81-1 to 81-3 do not particularly have to be distinguished from one another, they are simply referred to as the opening portion(s) 81, and if the blocking portions 82-1 to 82-3 do not particularly have to be distinguished from one another, they are simply referred to as the blocking portion(s) 82. Also, in the case a combined image for stereoscopically displaying a subject is to be displayed on the light modulation panel 62, the parallax barrier is formed to the barrier element 63, but in the case a parallax image, which is a 2D image, is to be displayed on the light modulation panel 62, the parallax barrier is not formed to the barrier element 63.

With the display unit 27 configured as in Fig. 2, a user observes an image displayed on the light modulation panel 62 from the side of the barrier element 63. Particularly, at the time of displaying a combined image, light which is emitted from the backlight 61 and transmitted through the light modulation panel 62 and the barrier element 63 enters a right eye ER or a left eye EL of the user. At this time, different light separated by the barrier element 63 enters the right eye ER and the left eye EL of the user, and different parallax images with a parallax are observed by the right eye ER and the left eye EL.

Additionally, in Fig. 2, the barrier element 63 is described as an example of a separation unit for optically separating the parallax images, but the separation unit is not limited to the parallax barrier, and it may be a lenticular lens or the like. Also, the parallax barrier as the separation unit is not limited to a variable barrier, and it may be a fixed barrier with an opening portion provided to a blocking plate or the like.

Moreover, the barrier element 63 may be arranged between the light modulation panel 62 and the backlight 61.

### (Observation of Stereoscopic Image from Preferred Viewing Distance)

Now, a case will be considered where a combined image obtained by combining parallax images of four different viewpoints is displayed by the display device 11, and where a user observes the display unit 27 from a position away from the display unit 27 by a predetermined distance.

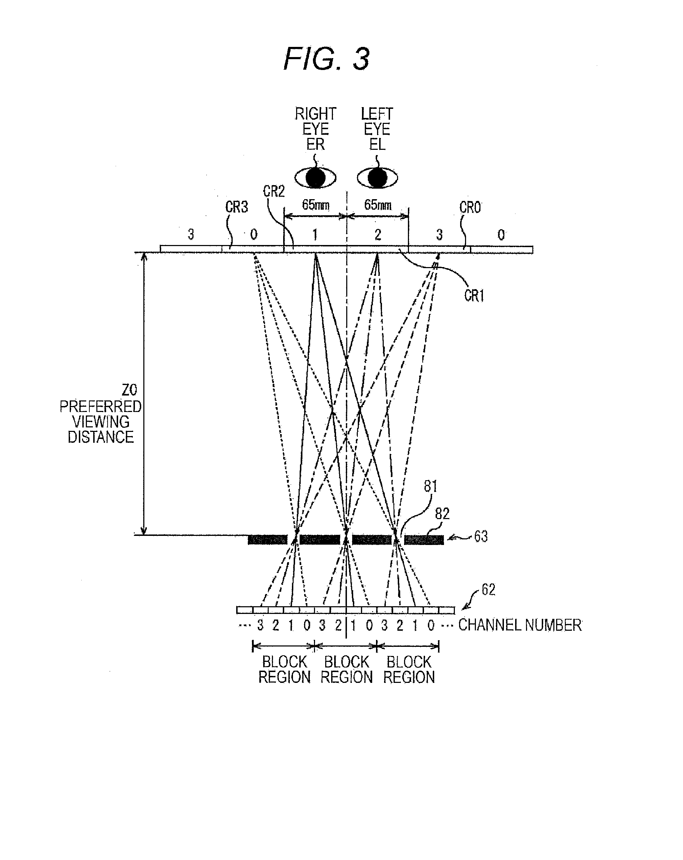

For example, as shown in Fig. 3, the middle position of the right eye ER and the left eye EL of the user is taken as the viewpoint position of the user, and the viewpoint position of the user is at a position away from the surface of the barrier element 63 by a distance Z0 (hereinafter, referred to as a "preferred viewing distance Z0"). Also, the distance between the right eye ER and the left eye EL (hereinafter, referred to as an "intra-eye distance E") is assumed to be 65 mm. Additionally, the intra-eye distance of a regular adult is about 65 mm.

Furthermore, block regions, each including pixels of four channels, channels CH0 to CH3, which are pixels where respective parallax images of four viewpoints are to be displayed, are provided along the horizontal direction in the drawing on the display surface of the light modulation panel 62.

Additionally, in Fig. 3, one quadrangle of the light modulation panel 62 represents one pixel, and the number of the channel to which each pixel belongs is shown below the pixels in the drawing. Also, in the drawing, the horizontal direction and the vertical direction are an x direction and a y direction, respectively, and a direction orthogonal to the x direction and the y direction is a z direction. Here, the x direction is the direction along which the right eye ER and the left eye EL of the user lie, that is, the parallax direction of the parallax images to be displayed on the light modulation panel 62, and the y direction is a direction orthogonal to the display surface of the light modulation panel 62.

In Fig. 3, pixels in the channel CH0, pixels in the channel CH1, pixels in the channel CH2, and pixels in the channel CH3 are arranged in order in the block regions from the right side to the left side in the drawing.

Also, in the block regions, pixels in the same channel are arranged in the z direction, for example. Moreover, these block regions are continuously arranged in the x direction on the display surface of the light modulation panel 62. In the following, a region, in one block region, including pixels in the same channel may be referred to also as a channel region.

Furthermore, one opening portion 81, forming the parallax barrier, is provided for one block region to the barrier element 63. Accordingly, when parallax images of viewpoints P0 to P3 are displayed in respective pixels in the channels CH0 to CH3, the parallax images of the viewpoints are optically separated by the barrier element 63.

That is, light which has been emitted from each pixel in the channel CH3 and which has passed through the opening portion 81 reaches a region CR0 on an xz plane away from the barrier element 63 by the preferred viewing distance Z0, and light which has been emitted from each pixel in the channel CH2 and which has passed through the opening portion 81 reaches a region CR1 on the xz plane. Likewise, light which has been emitted from each pixel in the channel CH1 and which has passed through the opening portion 81 reaches a region CR2, and light which has been emitted from each pixel in the channel CH0 and which has passed through the opening portion 81 reaches a region CR3.

Additionally, in the drawing, the numbers 0 to 3 arranged in the x direction on the upper side in the drawing indicate the channel numbers of the pixels from which the light reaching the regions with the numbers has been emitted. For example, the number "3" shown above the region CR0 in the drawing indicates that light from the pixel in the channel CH3 reaches the region CR0.

Here, the width of each of the regions CR0 to CR3 along the x direction is the intra-eye distance E (= 65 mm). Accordingly, parallax images shifted from each other by one viewpoint are observed by the left and right eyes of the user on the xz plane that is separated from the barrier element 63 by the preferred viewing distance Z0. For example, in the example in Fig. 3, the right eye ER of the user is in the region CR2, and the left eye EL is in the region CR1, and thus, parallax images of the viewpoint P1 and the viewpoint P2 are observed by the right eye ER and the left eye EL of the user, respectively. As a result, a subject on the parallax images is stereoscopically perceived by the user.

Furthermore, if, for example, the viewpoint position of the user moves in the left direction in the drawing from this state by the amount of the intra-eye distance E, the parallax image of the viewpoint P0 and the parallax image of the viewpoint P1 will be observed by the right eye ER and the left eye EL of the user, respectively.

### (Design of Parallax Barrier)

To enable a user observing the display unit 27 from a position that is separated by the preferred viewing distance Z0 to view the pixels in the same channel through the opening portions 81, the distance between the opening portions 81 or the distance from the opening portions 81 to the light modulation panel 62 has to be appropriately decided.

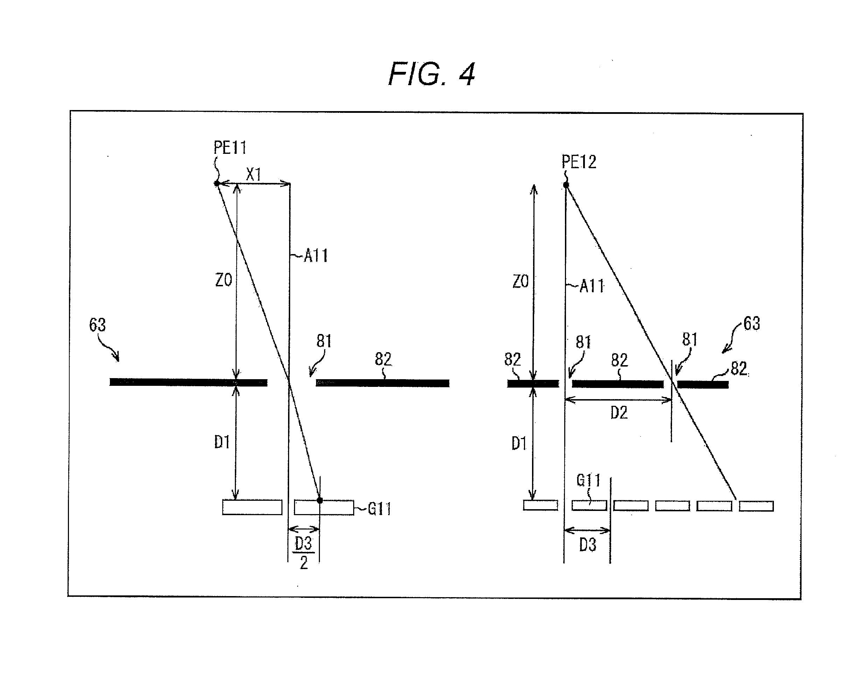

For example, in the example in Fig. 3, pixels that are next to each other on the light modulation panel 62 are observed by the left and right eyes of the user through the opening portions 81. In this case, when assuming that the preferred viewing distance Z0 is 900 mm, a distance D1 from the opening portion 81 to the light modulation panel 62 and a distance D2 between the opening portions 81 are determined as shown in Fig. 4. Additionally, the horizontal direction and the vertical direction in the drawing indicate the x direction and the y direction.

On the left side of Fig. 4, the straight line that passes through the center of the opening portion 81 and that is parallel to the y direction is a straight line A11, and one eye of a user is at a point PE11. Here, the point PE11 is at a position separated from the straight line A11 in the x direction by a distance X1, and separated from the opening portion 81 in the y direction by the preferred viewing distance Z0. Also, each quadrangle on the lower side in the drawing of the barrier element 63 represents a pixel on the light modulation panel 62.

For example, it is assumed that one pixel G11 is viewed from the position PE11 of the eye of the user through the opening portion 81 as shown on the left side in the drawing. When the distance between pixels is given as D3, the center of the pixel G11 is at a position separated from the straight line A11 by (D3)/2.

Here, if the space between the barrier element 63 and each pixel of the light modulation panel 62 is filled with a glass material, and the relative index of refraction of light from the point PE11 to the glass material is k1, X1:Z0 = (D3)/2:D1/k1 is true, and D1 = Z0 × ((D3)/2) × k1/X1 is established. For example, if Z0 is 900 mm, D3 is 0.05435 mm, X1 is 32.5mm, and k1 is 1.5, D1 = 900 × ((0.05435)/2) × 1.5/32.5 = 1.1288 mm is established based on these values.

Furthermore, as shown on the right side of the drawing, an eye of the user is assumed to be at a point PE12 on the straight line A11. In this case, since the light modulation panel 62 is for four viewpoints, the position on the light modulation panel 62 that is seen from the point PE12 through the opening portion 81 on the left side in the drawing and the position on the light modulation panel 62 that is seen through the adjacent opening portion 81 on the right should be four pixels apart.

Accordingly, Z0 : D2 = (Z0 + (D1/k1)) : 4×D3 is established, and the distance D2 between the opening portions 81 is obtained from D2 = Z0 × D3 × 4/(Z0 + (D1/k1)) Here, if Z0 is 900 mm, D3 is 0.05435 mm, D1 is 1.1288 mm, and k1 is 1.5, D2 = 900 × 0.05435 × 4/(900 + (1.1288/1.5)) = 0.2172184mm is established based on these values.

### (Observation from Half the Preferred Viewing Distance)

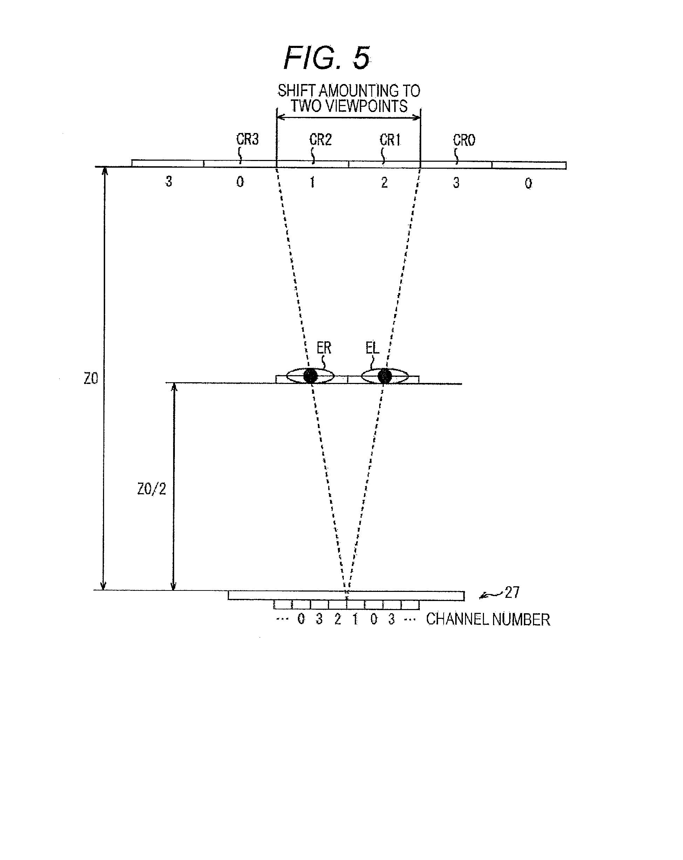

Now, it is assumed, for example, that the viewpoint position of the user is at a position separated from the display unit 27 in the y direction by a distance Z0/2 which is half the preferred viewing distance described above, as shown in Fig. 5.

In this case, light from one point on the light modulation panel 62 of the display unit 27 includes light that reaches the left end of the region CR2 through the position of the right eye ER of the user, and light that reaches the right end of the region CR1 through the position of the left eye EL. The distance between the reached points of the light in the x direction on the xz plane that is separated from the display unit 27 by the preferred viewing distance Z0 is two times the intra-eye distance E. That is, there is an amount of shift by two viewpoints.

Accordingly, for example, in a state where a pixel in the channel CH1 in a block region is being seen through a predetermined opening portion 81 by the right eye ER of the user, a pixel in the channel CH3 of the block region is seen through the same opening portion 81 by the left eye EL of the user.

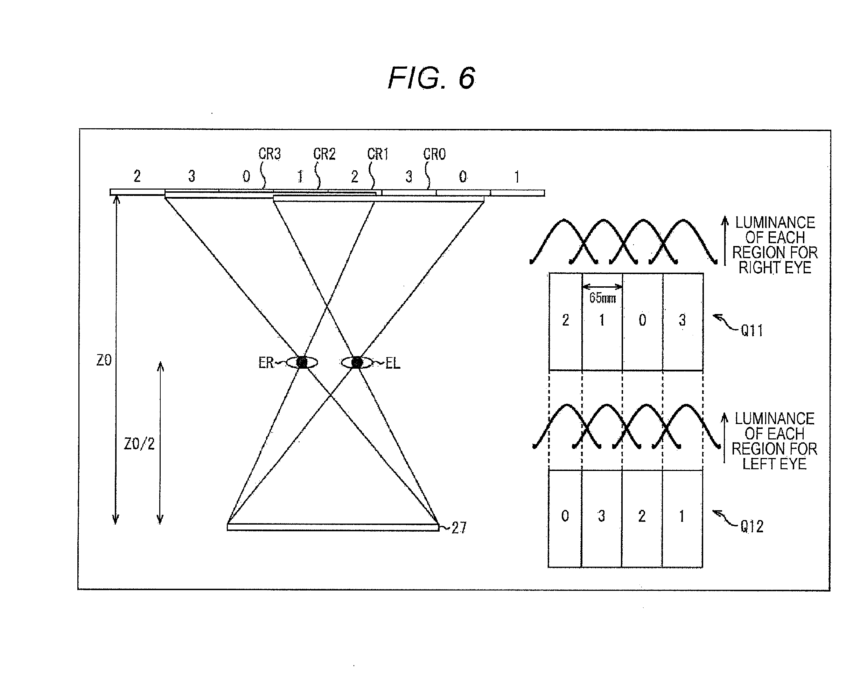

Also, even if the viewpoint position of the user is the same, if the user observes the display unit 27 from a distance half the preferred viewing distance Z0, as shown in Fig. 6, for example, the regions on the xz plane which the light passing through the positions of the eyes of the user reach are different depending on the region (the block region) of the display unit 27. Additionally, in Fig. 6, as in the case of Fig. 3, on a region on the xz plane that is separated from the display unit 27 by the preferred viewing distance Z0, the channel number of the pixel emitting the light that reaches the region is shown.

For example, as shown by an arrow Q11, in the state in Fig. 6, in a region including a plurality of block regions, on the left end, in the drawing, of the light modulation panel 62, a pixel in the channel CH2 is to be viewed by the right eye ER of the user through the opening portion 81. That is, light emitted from the pixel in the channel CH2 enters the right eye ER of the user through the opening portion 81.

Also, in a region, second from the left end of the light modulation panel 62 in the drawing, including a plurality of block regions, a pixel in the channel CH1 is to be viewed by the right eye ER of the user through the opening portion 81. Furthermore, in regions, third from the left end and on the right end of the light modulation panel 62 in the drawing, including a plurality of block regions, a pixel in the channel CH0 and a pixel in the channel CH3, respectively, are to be viewed by the right eye ER of the user through the opening portion 81.

Additionally, the quadrangles shown by the arrow Q11 represent respective regions on the light modulation panel 62, and the numbers in the regions indicate the channel numbers of the pixels to be viewed by the right eye ER of the user. Also, the curves above, in the drawing, the quadrangles representing the regions indicate the luminance distribution of the light which is emitted from each region and which reaches the right eye ER of the user. For example, at the left end of the region with the channel number "3" on the lightmodulation panel 62, light from the pixel in the channel CH3 and the light from the pixel in the channel CH0 enter the right eye ER of the user with the same luminance.

In the same manner, as shown by an arrow Q12, in a region including a plurality of block regions, on the left end of the light modulation panel 62 in the drawing, a pixel in the channel CH0 is to be viewed by the left eye EL of the user through the opening portion 81.

Also, in a region, second from the left end of the light modulation panel 62 in the drawing, including a plurality of block regions, a pixel in the channel CH3 is to be viewed by the left eye EL of the user through the opening portion 81. Furthermore, in regions, third from the left end and on the right end of the light modulation panel 62 in the drawing, including a plurality of block regions, a pixel in the channel CH2 and a pixel in the channel CH1, respectively, are to be viewed by the left eye EL of the user through the opening portion 81.

Additionally, the quadrangles shown by the arrow Q12 represent respective regions on the light modulation panel 62, and the numbers in the regions indicate the channel numbers of the pixels to be viewed by the left eye EL of the user. Also, the curves above, in the drawing, the quadrangles representing the regions indicate the luminance distribution of the light which is emitted from each region and which reaches the left eye EL of the user.

### (Image Display by Display Device)

As described, when the display unit 27 is observed from a distance about half the preferred viewing distance Z0, the pixels in a block region to be viewed by the right eye and the left eye of the user are pixels that are at positions separated from each other by a distance amounting to two pixels.

Accordingly, if, when displaying parallax images for the right eye and the left eye on the display unit 27, the parallax image for a right eye or for a left eye is appropriately displayed in the pixel in each channel, and the parallax images are observed by the user from a distance about half the preferred viewing distance Z0, occurrence of cross talk may be suppressed.

For example, in the state shown in Fig. 3, the right eye ER of the user is observing the pixel in the channel CH1, and the left eye EL of the user is observing the pixel in the channel CH2. It is assumed that, from this state, the user moves slightly to the right in Fig. 3. Then, because the pixel in the channel CH1 and the pixel in the channel CH2 are next to each other, the right eye ER of the user will see not only the pixel in the channel CH1, which it was seeing up to then, but also the pixel in the channel CH2, which the left eye EL was seeing, and cross talk occurs. That is, the subject on the left and right parallax images will be doubly seen.

In contrast, it is assumed that, in the state shown in Fig. 6, for example, the parallax image for a right eye is displayed in the channel CH1 in a block region slightly on the left side of the center, in the drawing, on the light modulation panel 62, and the parallax image for a left eye is displayed in the channel CH3 in the same block region.

In this case, the parallax image for a right eye is observed by the right eye ER of the user, and the parallax image for a left eye is observed by the left eye EL of the user. Even if, from this state, the user moves slightly to the right in the drawing, the pixels in the channel CH1 and the channel CH3 are separated from each other by two pixels, and the parallax image for a left eye will not be observed by the right eye ER of the user.

Moreover, if display of a parallax image on the pixel in each channel is switched according to the movement of the viewpoint position of the user and before cross talk occurs, switching of display of the left and right parallax images in each region will not be felt by the user, and a more natural image may be presented.

As described, if the parallax image for a right eye or for a left eye is appropriately displayed on the pixel in each channel according to the viewpoint position of the user, and the user observes from a distance about half the normal preferred viewing distance, occurrence of cross talk may be suppressed, and an image with a higher qualitymaybe presented. In the following, such a display method of a stereoscopic image will be referred to as a semi-viewing distance display method.

### (Display Control of Semi-Viewing Distance Display Method)

Next, specific control for displaying a stereoscopic image by the semi-viewing distance display method based on parallax images for a left eye and a right eye will be described.

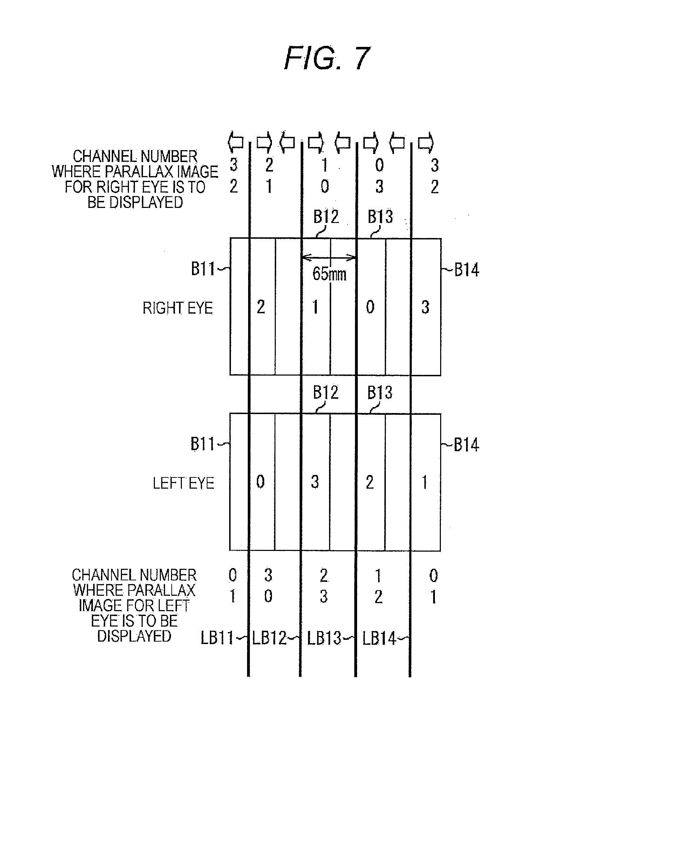

For example, it is assumed, as shown in Fig. 7, that a pixel in the channel CH2 in a region B11 on the left end, in the drawing, of the light modulation panel 62 is being viewed by the right eye of a user who is at a predetermined position. Also, with respect to regions B12, B13 and B14 of the light modulation panel 62, a pixel in the channel CH1, a pixel in the channel CH0, and a pixel in the channel CH3 are being viewed by the right eye of the user, respectively.

In this case, in the regions B11 to B14 of the light modulation panel 62, a pixel in the channel CH0, a pixel in the channel CH3, a pixel in the channel CH2, and a pixel in the channel CH1 are being viewed by the left eye of the user, respectively.

Additionally, these regions B11 to B14 are regions including a plurality of block regions. In this state, the display device 11 identifies, with respect to each of the regions B11 to B14, the position of a block region where the luminance of light from the pixel being viewed by the user is the highest among the block regions of each regions, and the positions are given as boundary positions LB11 to LB14.

That is, the boundary position LB11 is the position of the block region, among the block regions in the region B11, where the luminance of light from the pixel to be viewed is the highest. Similarly, each of the boundary positions LB12 to LB14 is the position of the block region, among the block regions in each of the regions B12 to B14, where the luminance of light from the pixel to be viewed is the highest.

When the boundary positions are identi fied in this manner, the display device 11 assigns the left and right parallax images to each channel with respect to each region on the light modulation panel 62 divided by the boundary positions LB11 to LB14.

Specifically, in each block region from the left end of the region B11 to the boundary position LB11, the parallax image for a right eye is assigned to the pixels in the channels CH2 and CH3, and the parallax image for a left eye is assigned to the pixels in the channels CH0 and CH1.

Similarly, in each block region from the boundary position LB11 to the boundary position LB12, the parallax image for a right eye is assigned to the pixels in the channels CH1 and CH2, and the parallax image for a left eye is assigned to the pixels in the channels CH0 and CH3 . Also, in each block region from the boundary position LB12 to the boundary position LB13, the parallax image for a right eye is assigned to the pixels in the channels CH0 and CH1, and the parallax image for a left eye is assigned to the pixels in the channels CH2 and CH3.

Furthermore, in each block region from the boundary position LB13 to the boundary position LB14, the parallax image for a right eye is assigned to the pixels in the channels CH0 and CH3, and the parallax image for a left eye is assigned to the pixels in the channels CH1 and CH2. Also, in each block region from the boundary position LB14 to the right end of the region B14, the parallax image for a right eye is assigned to the pixels in the channels CH2 and CH3, and the parallax image for a left eye is assigned to the pixels in the channels CH0 and CH1.

Then, a combined image is generated according to the assignment of the parallax image to each channel in the block regions, and the generated combined image is displayed on the light modulation panel 62.

Furthermore, if the viewpoint position of the user moves from this state, the channel of the pixel to be viewed by the user changes in each block region, and thus, the positions of the boundary positions LB11 to LB14 also change following the change in the viewpoint position. Then, the assignment of the parallax image to the pixel in each channel in the block regions is changed according to the movement of the boundary positions LB11 to LB14.

Additionally, in the following, a region, on the light modulation panel 62, including a plurality of continuously arranged block regions, where the same parallax image is assigned to the pixels in the same channel, will be referred to as a continuous block region.

For example, in the example in Fig. 7, the region including the block regions between the boundary position LB11 and the boundary position LB12, and the region including the block regions between the boundary position LB12 and the boundary position LB13 are each one continuous block region. That is, in Fig. 7, each of the boundary positions LB11 to LB14 is the boundary of the continuous block region.

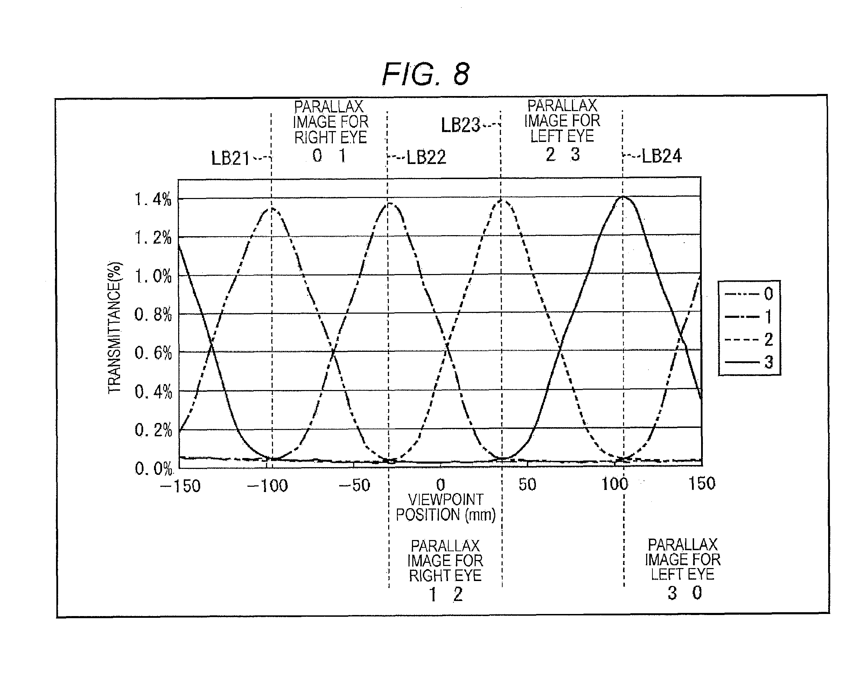

The boundary position of the continuous block region is, as described above, the position of the block region where the luminance of light from the pixel being viewed by the user is the highest, but, as shown in Fig. 8, for example, at the boundary position, the luminance of a pixel in a channel different from the pixel with the highest luminance is relatively low.

Additionally, in Fig. 8, the horizontal axis shows the viewpoint positions of the user in the x direction, and the vertical axis shows, with respect to the positions, the transmittance of light from a pixel in each channel in a predetermined block region, that is, the luminance of light from a pixel in each channel.

Fig. 8 shows, focusing on a specific block region, the luminance of light from a pixel in each channel that enters the eye of the user, where the viewpoint position of user is at each position. In Fig. 8, each of the two-dot chain line, the one-dot chain line, the dotted line and the solid line indicates the luminance of light from the pixels in the channels CH0 to CH3, respectively.

In this example, the luminance of light from a predetermined pixel observed by the user is the highest when the eye of the user is at each of positions LB21 to LB24. Accordingly, in the case the right eye of the user is at the position LB22, for example, the approximate center of the pixel in the channel CH1 of the focused block region is observed by the right eye of the user, and thus, this block region is the boundary position of the continuous block region.

Accordingly, if the right eye of the user is slightly on the left side, in the drawing, than the position LB22, the parallax image for a right eye is displayed, in the focused block region, in the pixels in the channels CH0 and CH1. Then, when the right eye of the user moves slightly to the right from this state, in the drawing, than the position LB22, the parallax image for a right eye will be displayed, in the focused region, in the pixels in the channels CH1 and CH2.

That is, in the focused block region, the display of the parallax image for a right eye is switched, according to the movement of the viewpoint position of the user, from the channels CH0 and CH1 to the channels CH1 and CH2. That is, when the viewpoint position of the user moves, light from a pixel in a different channel will be perceived by the right eye of the user.

However, near the position LB22, the luminance of pixels in other channels CH0 and CH2 is relatively low compared to the luminance of the pixel in the channel CH1. Accordingly, near the position LB22, the assignment of the parallax image is switched from the channel CH0 to the channel CH2 in the state where the right eye of the user is mostly observing the light from the pixel in the channel CH1 near the position LB22, and where the luminance of other pixels is at the lowest. An image with a high quality may thereby be presented without giving the user a sense of discomfort.

Now, the boundary position of the continuous block region is the position of a block region where the luminance of light from the pixel being viewed by the user is the highest. Here, the block region where the luminance is the highest is a block region where the approximate center of the pixel is being viewed by the user.

At an end portion of the display unit 27, a phenomenon is known to occur where the seeming thickness of the glass between the barrier element 63 and the light modulation panel 62 becomes thin. Accordingly, in the case of obtaining the boundary position of the continuous block region based on the viewpoint position of the user, which position of a pixel in which channel is being viewed by the user is desirably precisely obtained for each block region using an exact formula of the incident angle of light and the angle of refraction.

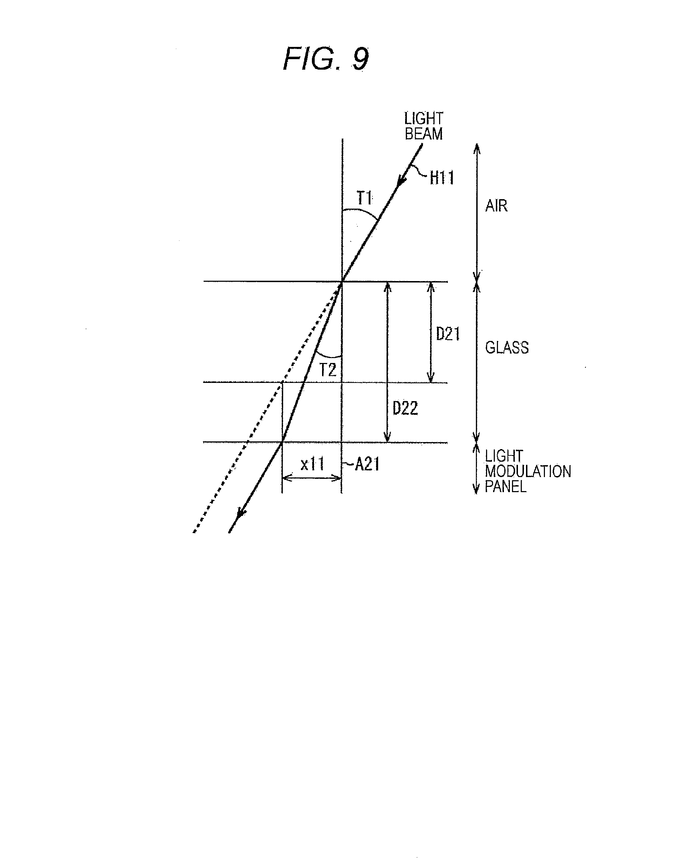

For example, as shown in Fig. 9, it is assumed that a predetermined light beam H11 passes through the air, enters a glass material with a thickness D21, and reaches the surface of the light modulation panel 62. Also, a straight line that passes through the incident position of the light beam H11 on the glass material, and that is orthogonal to the surface of the glass material is given as a straight line A21.

At this time, an angle T2 formed between the optical path of the light beam H11 after entering the glass material and the straight line A21 with respect to an incident angle T1 of the light beam H11 travelling through the air onto the glass material is obtained based on a relative index of refraction k11 of the light beam H11 travelling through the air towards the glass material and the incident angle T1. That is, the angle T2 = asin(sin(T1/k11)) is true.

Also, when the angle T2 is obtained, a distance x11 from the straight line A21 to the incident position of the light beam H11 on the surface of the light modulation panel 62 may be obtained by a seeming thickness D22 of the glass material and the angle T2. That is, the distance x11 = D22 × tan (T2) is true.

By obtaining the distance x11 in this manner, the precise position on the pixel being viewed by the user (hereinafter, also referred to as the viewing position on the pixel) may be obtained for each block region.

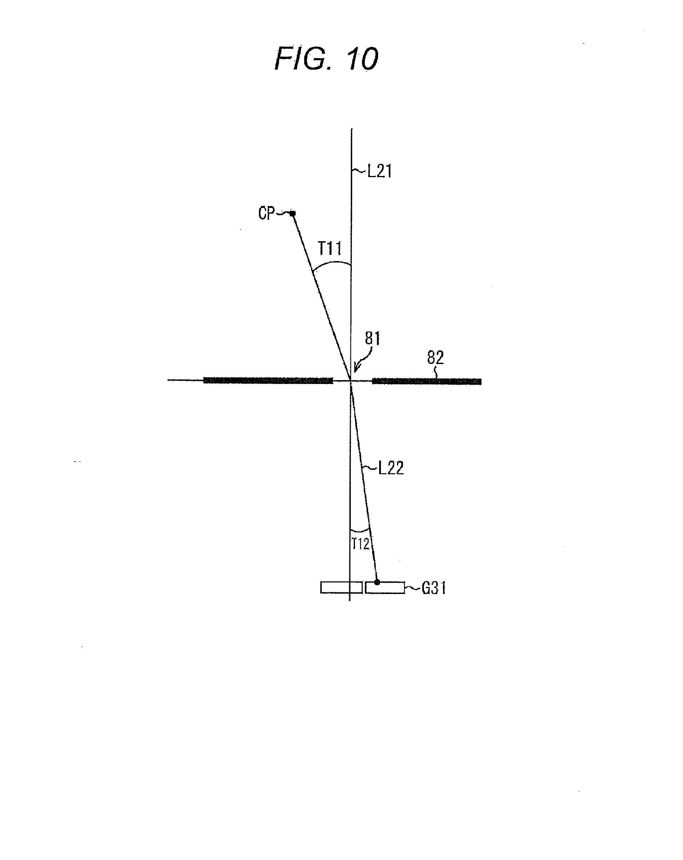

Specifically, as shown in Fig. 10, for example, the horizontal direction in the drawing, that is, the direction parallel to the display surface of the light modulation panel 62, is given as the x direction, the vertical direction in the drawing, that is, the direction orthogonal to the display surface of the light modulation panel 62 is given as the y direction, and a predetermined position on the xy-coordinate system is given as a position CP of the eye of the user.

Also, the opening portion 81 at the center of the barrier element 63 is given as the 0-th opening portion 81, and the opening portion 81 n-th, in the drawing, from the 0-th opening portion 81 in the left direction is given as the n-th opening portion 81, and the opening portion 81 n-th, in the drawing, from the 0-th opening portion 81 in the right direction is given as the -n-th opening portion 81.

Here, with respect to the n-th opening portion 81 (hereinafter, referred to also as the opening portion 81 of number n), a case of finding out which channel's pixel in a block region is being viewed by the user through the opening portion 81 in question will be considered. First, an incident angle T11 of the light beam from the position CP with respect to the n-th opening portion 81 is obtained from the coordinates of the position CP and the coordinates of the center position of the opening portion 81. That is, the incident angle T11 is an angle formed by a straight line L21 that is parallel to the y direction and the light beam from the position CP.

When the incident angle T11 is obtained, an angle T12 is obtained which is formed by a straight line L22 indicating the light beam entering the opening portion 81 from the position CP and travelling towards the light modulation panel 62, that is, the optical path of the light beam, and the straight line L21. That is, as has been described with reference to Fig. 9, the angle T12 = asin(sin(T11/k11)) is established based on the incident angle T11 and the index of refraction k11 of the glass material between the opening portion 81 and the pixel on the light modulation panel 62.

Then, an equation representing the straight line L22 (for example, y = ax + b) is established, and thus, if the coordinates of a point where the straight line L22 indicating the optical path of the light beam and the pixel on the light modulation panel 62 intersects is obtained, which position on which channel's pixel is being viewed by the user may be obtained. In Fig. 10, it can be seen that the light beam from the position CP reaches a pixel G31, and that this pixel G31 is being viewed by the user.

Also, the position on a pixel that is being viewed by the user, that is, the viewing position of the user on the pixel, takes a value between -0.5 and 0.5 when the center position of the pixel is given as 0. For example, the position on the right, in the drawing, of the pixel is given as -0.5, and the position on the left, in the drawing, of the pixel is given as 0.5.

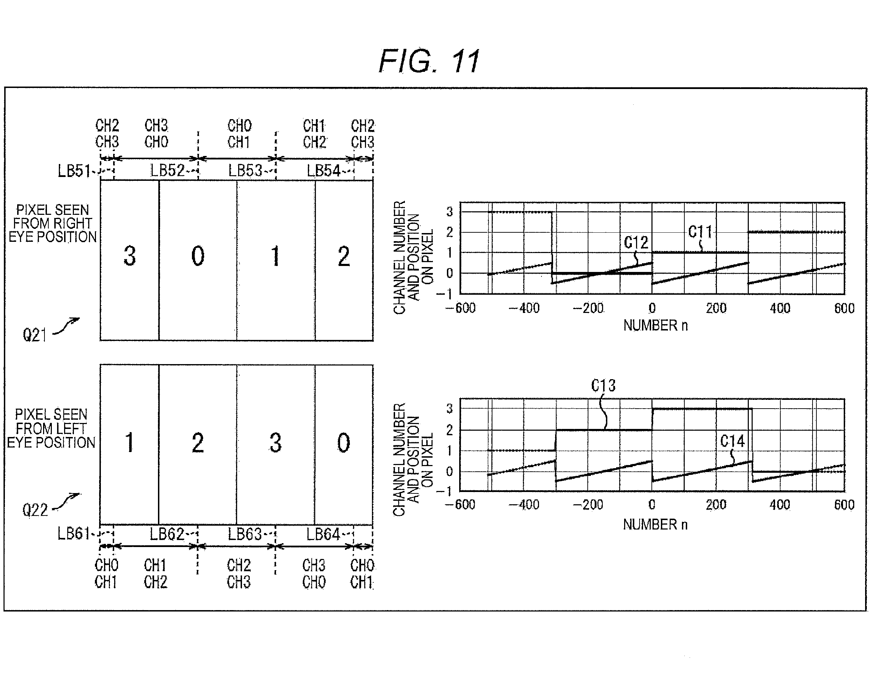

When a channel m of a pixel being viewed by the user (hereinafter, referred to also as a viewing pixel) and the viewing position on the viewing pixel are obtained for each block region (opening portion 81) for the right and left eyes of the user, a result shown on the right side in Fig. 11 is obtained, for example.

Additionally, on the right side in Fig. 11, the horizontal axis shows the number n of the opening portion 81, and the vertical axis shows the channel number or the viewing position on the viewing pixel.

In Fig. 11, a zigzag line C11 indicates the channel number of the viewing pixel in each block region viewed by the right eye of the user, and a zigzag line C12 indicates the viewing position on the viewing pixel in each block region viewed by the right eye of the user.

Here, the direction from the 0-th opening portion 81 to an n-th (where 1 ≤ n) opening portion 81 is given as a +x direction, and the direction opposite the +x direction is given as a -x direction. In this case, it can be seen that the right eye of the user observing a plurality of opening portions 81 adjacent to the 0-th opening portion 81 in the +x direction is viewing the pixels in the channel CH1 through the opening portions 81. Also, it can be seen, with respect to the opening portion 81 which is approximately at the center of the opening portions 81 that are continuously arranged and that allow the pixels in the channel CH1 to be viewed, that approximately center of the pixel in the channel CH1 is being observed by the right eye of the user through the opening portion 81.

Which channel's pixel is being observed by the right eye of the user in each region on the display surface of the light modulation panel 62 may be grasped from the zigzag line C11, as shown by an arrow Q21. Additionally, the horizontally long quadrangle indicated by the arrow Q21 represents the entire display surface of the light modulation panel 62 that is seen by the user, and the number in a vertically long rectangle in the quadrangle indicates the channel number of the pixel that is viewed by the right eye of the user observing the region of the rectangle.

Accordingly, the pixel in the channel CH2 is observed by the right eye of the user in the region on the right end, in the drawing, of the display surface of the light modulation panel 62, that is, the region at the end in the +x direction, and the pixel in the channel CH1 is observed by the right eye of the user in the region adjacent on the left side, in the drawing, of the afore-mentioned region. Also, the pixel in the channel CH0 is observed by the right eye of the user in the region slightly in the -x direction from the center of the display surface of the light modulation panel 62, and the pixel in the channel CH3 is observed by the right eye of the user in the region adjacent on the left side of the afore-mentioned region.

Moreover, since the viewing position, on each viewing pixel, viewed from the position of the right eye of the user can be grasped from the zigzag line C12, if the position of a block region (the opening portion 81) where the viewing position is zero is made the boundary position of the continuous block region, boundary positions LB51 to LB54 will be determined as shown by the arrow Q21.

In each of the continuous block regions obtained by the division by the boundary positions LB51 to LB54, the parallax image for a right eye is assigned to the pixels in two channels which are the viewing pixels in the corresponding continuous block region.

Thatis, for example, in each block region present between the end of the light modulation panel 62 in the -x direction and the boundary position LB51, the parallax image for a right eye is assigned to the pixels in the channels CH2 and CH3. Also, between the boundary position LB51 and the boundary position LB52, the parallax image for a right eye is assigned to the pixels in the channels CH0 and CH3, and between the boundary position LB52 and the boundary position LB53, the parallax image for a right eye is assigned to the pixels in the channels CH0 and CH1.

Furthermore, between the boundary position LB53 and the boundary position LB54, the parallax image for a right eye is assigned to the pixels in the channels CH1 and CH2, and between the boundary position LB54 and the end of the light modulation panel 62 in the +x direction, the parallax image for a right eye is assigned to the pixels in the channels CH2 and CH3.

As in the case of the right eye, in Fig. 11, a zigzag line C13 indicates the channel number of the viewing pixel in each block region seen by the left eye of the user, and a zigzag line C14 indicates the viewing position on the viewing pixel in each block region seen by the left eye of the user. For example, it can be seen that the left eye of the user observing a plurality of opening portions 81 adjacent to the 0-th opening portion 81 in the +x direction is viewing the pixels in the channel CH3 through the opening portions.

Which channel's pixel is being observed by the left eye of the user in each region on the display surface of the light modulation panel 62 may be grasped from the zigzag line C13, as shown by an arrow Q22. Additionally, the horizontally long quadrangle indicated by the arrow Q22 represents the entire display surface of the light modulation panel 62, and the number in a vertically long rectangle in the quadrangle indicates the channel number of the pixel that is viewed by the left eye of the user observing the region of the rectangle.

Accordingly, it can be understood that regions where the pixels in the channels CH0, CH3, CH2, and CH1 are observed by the left eye of the user are arranged in this order from the right end region, in the drawing, of the display surface of the light modulation panel 62 to the left end region.

Moreover, since the viewing position, on each viewing pixel, seen from the position of the left eye of the user can be grasped from the zigzag line C14, if the position of a block region (the opening portion 81) where the viewing position is zero is made the boundary position of the continuous block region, boundary positions LB61 to LB64 will be determined as shown by the arrow Q22.

In each of the continuous block regions obtained by the division by the boundary positions LB61 to LB64, the parallax image for a left eye is assigned to the pixels in two channels which are the viewing pixels in the corresponding continuous block region.

That is, in each block region present between the end of the light modulation panel 62 in the -x direction and the boundary position LB61, the parallax image for a left eye is assigned to the pixels in the channels CH0 and CH1. Also, between the boundary position LB61 and the boundary position LB62, the parallax image for a left eye is assigned to the pixels in the channels CH1 and CH2, and between the boundary position LB62 and the boundary position LB63, the parallax image for a left eye is assigned to the pixels in the channels CH2 and CH3.

Furthermore, between the boundary position LB63 and the boundary position LB64, the parallax image for a left eye is assigned to the pixels in the channels CH0 and CH3, and between the boundary position LB64 and the end of the light modulation panel 62 in the +x direction, the parallax image for a left eye is assigned to the pixels in the channels CH0 and CH1.

As described, when the channel number of the viewing pixel and the viewing position on the viewing pixel are obtained for each opening portion 81 (the block region), the boundary position of the continuous block region is determined. The channels to which the left and right parallax images are to be assigned are thereby determined for each block region belong to each continuous block region.

Incidentally, the boundary position of the continuous block region is ideally the same between the boundary position seen by the right eye and the boundary position seen by the left eye, but in reality, since the right eye and the left eye of the user are at different positions, there is a shift between the boundary positions.

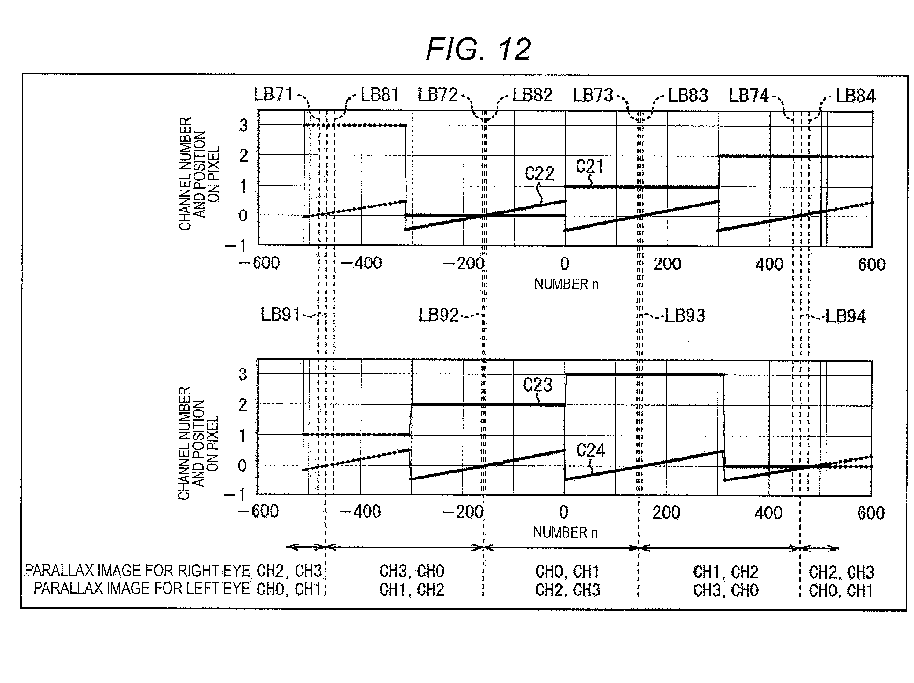

For example, also in a case where the viewpoint position of the user is at a position substantially in front of the opening portion 81 numbered zero, and the distance from the display unit 27 to the viewpoint position is substantially half the preferred viewing distance Z0, the shift between the boundary positions with respect to the right eye and the left eye of the user will be greater at a position further away from the center, as shown in Fig. 12.

Additionally, in Fig. 12, the horizontal axis indicates the number n of the opening portion 81, and the vertical axis indicates the channel number or the viewing position on the viewing pixel.

In Fig. 12, a zigzag line C21 indicates the channel number of the viewing pixel in each block region seen by the right eye of the user, and a zigzag line C22 indicates the viewing position on the viewing pixel in each block region seen by the right eye of the user. Also, straight lines LB71 to LB74 indicate the boundary positions of the continuous block regions determined from the zigzag line C22.

Furthermore, a zigzag line C23 indicates the channel number of the viewing pixel in each block region seen by the left eye of the user, and a zigzag line C24 indicates the viewing position on the viewing pixel in each block region seen by the left eye of the user. Also, straight lines LB81 to LB84 indicate the boundary positions of the continuous block regions determined from the zigzag line C24.

Additionally, in the following, the straight lines LB71 to LB74 may be referred to also as boundary positions LB71 to LB74, and the straight lines LB81 to LB84 may be referred to also as boundary positions LB81 to LB84.

In the example in Fig. 12, the boundary positions LB81 to LB84 based on a left eye correspond to the boundary positions LB71 to LB74 based on a right eye, respectively, and the shift between the corresponding boundary positions is greater at boundary positions further away from the center of the light modulation panel 62.

When such a shift occurs, discrepancy occurs with respect to assignment of the parallax image to the pixel in each channel in the block region.

For example, with reference to a right eye, it is assumed that the parallax image for a right eye is assigned to the pixels in the channels CH0 and CH3 in the block regions between the boundary position LB71 and the boundary position LB72. Also, with reference to a left eye, it is assumed that the parallax image for a left eye is assigned to the pixels in the channels CH0 and CH1 in the block regions between the end of the light modulation panel 62 in the -x direction and the boundary position LB81.

Then, both the parallax image for a right eye and the parallax image for a left eye are assigned to the pixels in the channel CH0 in the block regions between the boundary position LB71 and the boundary position LB81.

Accordingly, with the display device 11, the middle positions (the mean positions) of the boundary positions LB71 to LB74 and respective boundary positions LB81 to LB84 are made boundary positions LB91 to LB94 which are the final boundary positions.

Accordingly, for example, as shown on the lower side in the drawing, regions divided by the boundary positions LB91 to LB94 are made the continuous block regions, and assignment of a parallax image is performed for each block region. Additionally, on the lower side in the drawing, the channel numbers of pixels to which the parallax images for a right eye and for a left eye are assigned in each region are shown.

For example, between the boundary position LB91 and the boundary position LB92, the parallax image for a right eye is assigned to the pixels in the channels CH0 and CH3 in the block regions, and the parallax image for a left eye is assigned to the pixels in the channels CH1 and CH2.

Also, between the boundary position LB92 and the boundary position LB93, the parallax image for a right eye is assigned to the pixels in the channels CH0 and CH1 in the block regions, and the parallax image for a left eye is assigned to the pixels in the channels CH2 and CH3.

Additionally, when the middle position of a boundary position based on a right eye and the boundary position based on a left eye is made the final boundary position of continuous block regions, a slight shift may occur near the boundary position with respect to the assignment of the parallax image based on a right eye or a left eye, but no particular influence is exerted on the stereoscopic viewing of the parallax images.

However, when the viewpoint position of the user deviates from Z0/2, which is the optimal viewing distance according to the semi-viewing distance display method, that is, when the viewpoint position of the user nears or moves away from the display unit 27, the shift between the boundary position based on a right eye and the boundary position based on a left eye is gradually increased.

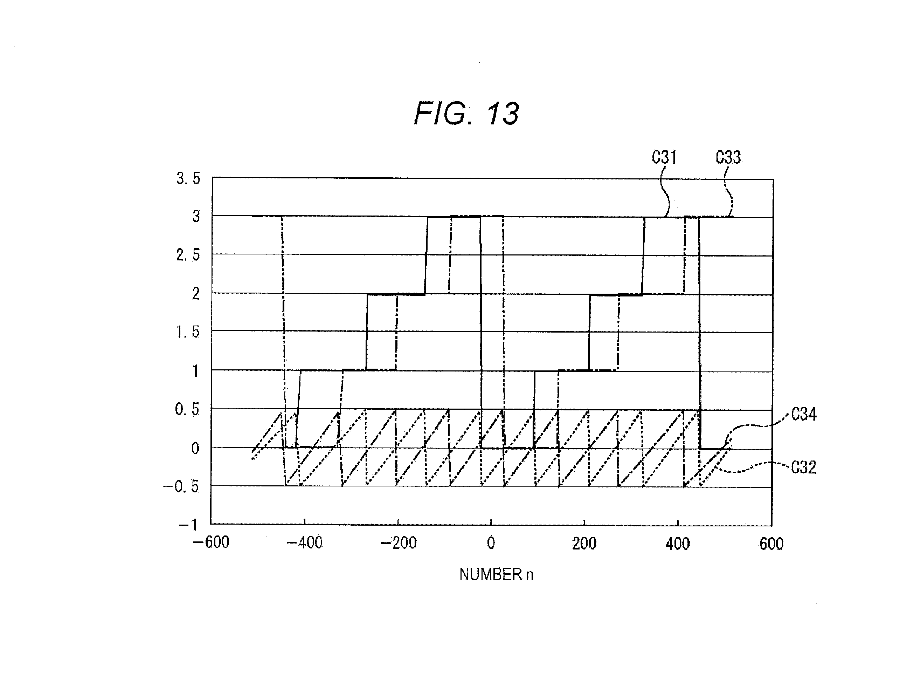

Then, for example, as shown in Fig. 13, the pixels in the same channel are observed, in some block regions, by the right and left eyes of the user as the viewing pixel. Additionally, in Fig. 13, the horizontal axis indicates the number n of the opening portion 81, and the vertical axis indicates the channel number or the viewing position on the viewing pixel.

In Fig. 13, a zigzag line C31 indicates the channel number of the viewing pixel in each block region seen by the right eye of the user, and a zigzag line C32 indicates the viewing position on the viewing pixel in each block region seen by the right eye of the user. Also, a zigzag line C33 indicates the channel number of the viewing pixel in each block region seen by the left eye of the user, and a zigzag line C34 indicates the viewing position on the viewing pixel in each block region seen by the left eye of the user.

In this example, the zigzag line C31 and the zigzag line C33 are partially overlapped, and in the block regions at these portions, the viewing pixels in the same channel are observed by the right and left eyes of the user. Thus, even if the middle position of the boundary position determined based on a right eye and the boundary position determined based on a left eye is made the final boundary position of a continuous block region, the parallax images for a right eye and for a left eye have to be assigned to the same channel in a certain block region. That is, the user is not allowed to stereoscopically observe the subject, and stereoscopic display using the parallax image for a right eye and the parallax image for a left eye becomes impossible.

In this manner, if the viewing pixel in a block region is obtained for each opening portion 81 (block region) for a certain viewpoint position, whether stereoscopic viewing of parallax images is possible in the case of the user observing the display unit 27 from the current viewpoint position may be determined based on the result.

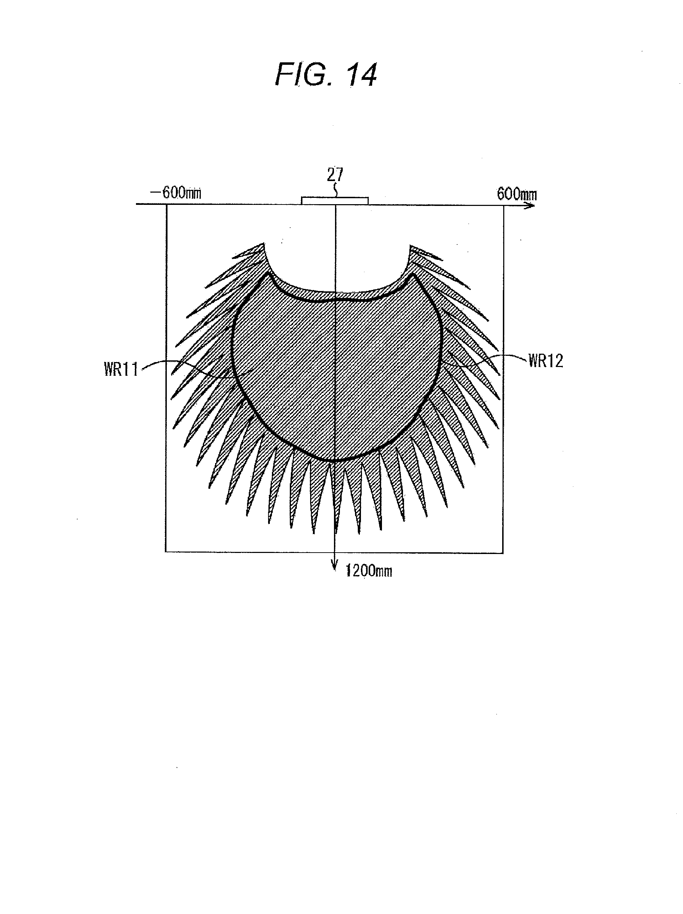

Accordingly, if calculation for determining the viewing pixel for each block region is performed for each viewpoint position, a region where stereoscopic display (stereoscopic viewing) is possible and a region where it is impossible, on the xy plane, may be obtained, as shown in Fig. 14, for example. Additionally, in Fig. 14, the horizontal direction and the vertical direction indicate the x direction and the y direction.

In the example in Fig. 14, a region WR11 shown with diagonal lines, in the peripheral region of the display unit 27, is a region where stereoscopic display of parallax images is possible. Thus, in the case of performing stereoscopic display of parallax images by the semi-viewing distance display method, the display device 11 takes a region WR12 within the region WR11 as the region where stereoscopic display of parallax images is possible. Then, in the case the viewpoint position of the user is inside the region WR12, the display device 11 stereoscopically displays a subject based on the left and right parallax images, and in the case the viewpoint position of the user is outside the region WR12, the display device 11 displays one of the left and right parallax images.

By switching between 3D display and 2D display according to the viewpoint position of the user in this manner, a natural image may be presented to the user without giving the user a sense of discomfort.

### (Description of Display Process)

Next, a concrete operation of the display device 11 will be described.

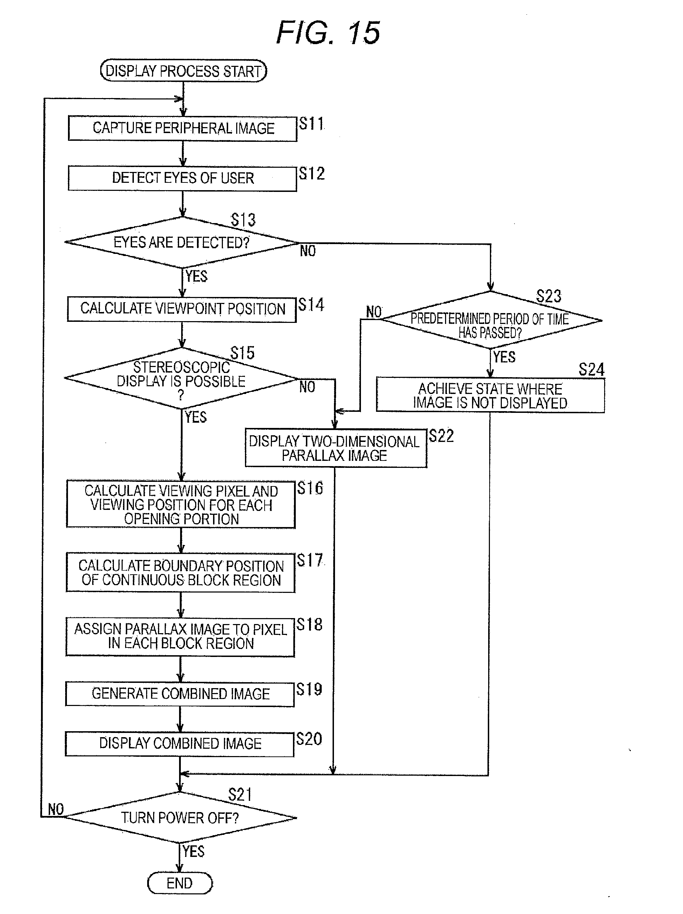

When a stereoscopic image including a parallax image for a right eye and a parallax image for a left eye is specified, and display of these parallax images by the semi-viewing distance display method is instructed, the display device 11 performs a display process, and causes the parallax images to be stereoscopically displayed. In the following, the display process by the display device 11 will be described with reference to the flow chart of Fig. 15.

In step S11, the capturing unit 21 captures an image of a region surrounding the display unit 27 as a peripheral image, and supplies the peripheral image to the detection unit 22.

In step S12, the detection unit 22 detects the eyes of a user based on the peripheral image supplied by the capturing unit 21. For example, the detection unit 22 detects the face of the user from the peripheral image, and then, further detects the eyes of the user from the region of the detected face.

In step S13, the detection unit 22 determines whether the eyes of the user have been detected from the peripheral image.

In the case it is determined in step S13 that the eyes of the user have been detected, the viewpoint position calculation unit 31 calculates, in step S14, the viewpoint position of the user based on the positions of the eyes of the user which have been detected, and supplies the viewpoint position to the assignment control unit 23. For example, the viewpoint position calculation unit 31 obtains the position, on the xy plane, in the middle of the left and right eyes of the user as the viewpoint position.

In step S15, the determination unit 32 of the assignment control unit 23 determines whether stereoscopic display of the parallax images is possible or not, based on the viewpoint position of the user supplied by the viewpoint position calculation unit 31.

For example, the determination unit 32 has stored therein region information for identifying the region WR12, shown in Fig. 14, where stereoscopic display is possible, and determines whether the viewpoint position of the user is within the region WR12 or not based on the region information that is stored, to thereby determine whether stereoscopic display is possible. Accordingly, in the case the viewpoint position of the user is at a position within the region WR12, for example, it is determined that stereoscopic display is possible.

In the case it is determined in step S15 that stereoscopic display is possible, the viewing position calculation unit 33 calculates the viewing pixel and the viewing position for each opening portion 81 in step S16, based on the viewpoint position of the user supplied by the viewpoint position calculation unit 31.

That is, the viewing position calculation unit 33 performs the calculation described with reference to Fig. 10 for the right eye position and the left eye position of the user determined based on the viewpoint position, and calculates, for each opening portion 81 (block region), the viewing pixel observed through the opening portion 81, and the viewing position on the viewing pixel. A calculation result as shown in Fig. 11 is thereby obtained, for example. That is, the channel number of the pixel that is observed by the right eye or the left eye of the user (the viewing pixel), and the position, on the pixel, which is observed by the user (the viewing position) are obtained for each block region.

In step S17, the boundary position calculation unit 34 calculates the boundary position of a continuous block region based on the calculation result for the viewing position for each block region.

Specifically, the boundary position calculation unit 34 takes the position where the viewing position is "zero" as the boundary position based on a right eye, based on the calculation result for the viewing position in each block region obtained with respect to the right eye position. That is, the position on the block region where the center of the pixel is observed by the right eye through the opening portion 81 is made the boundary position based on a right eye. Similarly, the boundary position calculation unit 34 takes the position where the viewing position is "zero" as the boundary position based on a left eye, based on the calculation result for the viewing position in each block region obtained with respect to the left eye position.

Then, the boundary position calculation unit 34 takes the middle positions of the boundary positions based on a right eye and the corresponding boundary positions based on a left eye as the final boundary positions of the continuous block regions. Here, a boundary position based on a left eye corresponding to a boundary position based on a right eye is the boundary position based on a left eye that is closest to the boundary position based on a right eye.

The boundary positions LB91 to LB94 shown in Fig. 12, for example, are obtained by such calculation.

In step S18, the boundary position calculation unit 34 assigns a parallax image for a right eye or a parallax image for a left eye to a pixel in each block region, based on the calculation result for the boundary position of the continuous block region.

For example, in the example in Fig. 12, of the block regions on the display surface of the light modulation panel 62, the parallax image for a right eye is assigned to the pixels in the channels CH0 and CH3 (channel regions)in the block regions present between the boundary position LB91 and the boundary position LB92. Also, the parallax image for a left eye is assigned to the pixels in the channels CH1 and CH2 in the block regions present between the boundary position LB91 and the boundary position LB92.

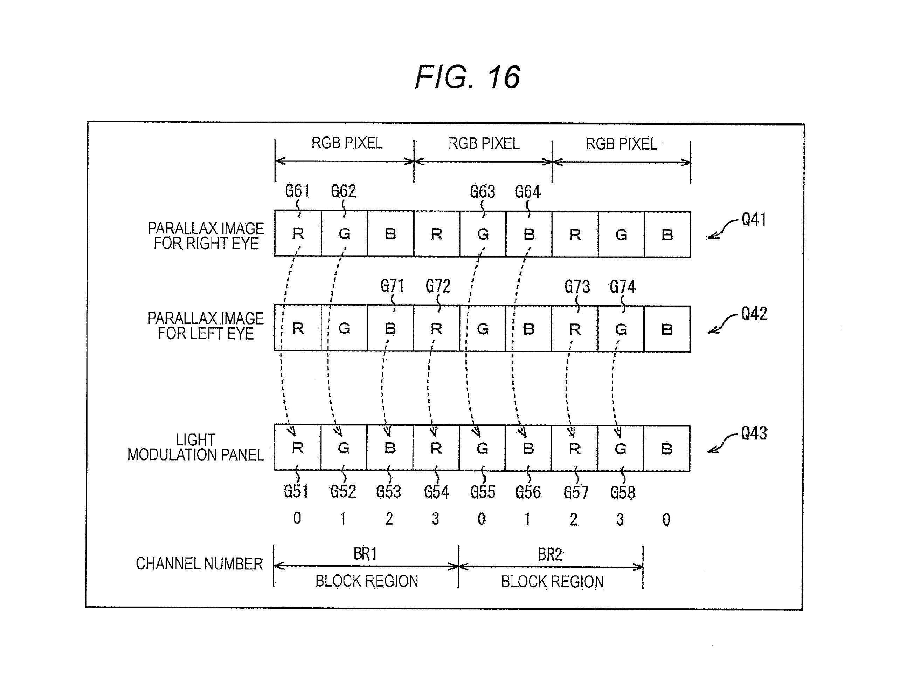

More specifically, for example, as shown in Fig. 16, regions, on the light modulation panel 62, including four pixels are made a block region BR1 and a block region R2. Additionally, in Fig. 16, the horizontal direction is the x direction.

In Fig. 16, rectangles shown by arrows Q41 to Q43 represent the parallax image for a right eye, the parallax image for a left eye, and the light modulation panel 62. Also, one quadrangle in each of the rectangles represents one pixel, and letters "R", "G" and "B" in the pixels indicate the colors of the pixels.

For example, the region, on the light modulation panel 62, including pixels G51 to G54 is made the block region BR1, and the region including pixels G55 to G58 is made the block region BR2. Here, for example, the pixel G51 is a pixel that is provided with a R (red) color filter and that transmits only the R light, and the pixel G52 is a pixel that is provided with a G (green) color filter and that transmits only the G light.

Also, the channel number of a pixel is shown on the lower side, in the drawing, of each pixel on the light modulation panel 62. For example, the pixel G51 is a pixel in the channel CH0, and the pixel G52 is a pixel in the channel CH1.

Furthermore, at the same positions, in the horizontal direction, as the pixels on the light modulation panel 62, the pixels of the parallax images for a right eye and for a left eye at the same positions as the afore-mentioned pixels are shown.

Generally, pixels on an image have values of R, G and B, and thus, a region of R, G and B adjacent to one another is taken as one pixel, and in many cases, each region of colors R, G and B is treated as a sub-pixel.

Specifically, a region including three continuous pixels R, G and B on the left end, in the drawing, of the parallax image for a right eye, for example, is generally taken as one pixel (hereinafter, referred to also as an RGB pixel as appropriate), and a pixel G61 or a pixel G62 of a color is in many cases treated as a sub-pixel. Here, the pixel G61 or G62 will be referred to as one pixel.

Similarly, for example, a region of three colors including the pixels G51 to G53 is generally treated as one pixel, but here, each of the pixels G51 to G53 is treated as one pixel.

For example, it is assumed that, in the block regions BR1 and BR2, the parallax image for a right eye is assigned to the pixels in the channels CH0 and CH1, and the parallax image for a left eye is assigned to the pixels in the channels CH2 and CH3 by the boundary position calculation unit 34.

At this time, the boundary position calculation unit 34 assigns the pixels G61 and G62 of the parallax image for a right eye to the pixels G51 and G52, on the light modulation panel 62, at the same positions as the afore-mentioned pixels. Also, the boundary position calculation unit 34 assigns pixels G71 and G72 of the parallax image for a left eye to the pixels G53 and G54, on the light modulation panel 62, at the same positions as the afore-mentioned pixels.

In a similar manner, the boundary position calculation unit 34 assigns the pixels G63 and G64 of the parallax image for a right eye to the pixels G55 and G56, and assigns pixels G73 and G74 of the parallax image for a left eye to the pixels G57 and G58.

If the parallax image for a right eye or for a left eye is assigned to a predetermined channel in a block region in this manner, then, more precisely, the pixel of the parallax image for a right eye or for a left eye at the same position as the pixel in the channel is assigned to the pixel in the channel.

When the parallax image for a right eye or for a left eye is assigned in this manner to the pixel in each channel and for each block region, the boundary position calculation unit 34 supplies the assignment result to the generation unit 25, and issues an instruction regarding generation of a combined image.

In step S19, the generation unit 25 generates a combined image based on the assignment result supplied by the boundary position calculation unit 34 and the parallax images for a right eye and for a left eye read out from the recording unit 24, and supplies the combined image to the display control unit 26. For example, in the case assignment as shown in Fig. 16 is performed, the generation unit 25 generates a combined image in such a way that the pixels G61 and G62 of the parallax image for a right eye are displayed in the pixels G51 and G52, and the pixels G71 and G72 of the parallax image for a left eye are displayed in the pixels G53 and G54.

Additionally, the parallax image may be acquired or received from an external device instead of being acquired from the recording unit 24.

In step S20, the display control unit 26 supplies the combined image supplied by the generation unit 25 to the display unit 27 and causes the combined image to be displayed.

For example, the display unit 27 emits light from the backlight 61 based on the supplied combined image, and also, controls the transmittance of light from the backlight 61 for each pixel by applying voltage to the light modulation panel 62. Also, the display unit 27 applies voltage to the barrier element 63, and forms a parallax barrier including the opening portion 81 and the blocking portion 82.

The light transmitted from the backlight 61 through each pixel of the light modulation panel 62 is thereby optically separated by the parallax barrier, a part of the separated light enters the right eye or the left eye of the user, and a subject on the parallax images is stereoscopically observed by the user. That is, the region, of the parallax image for a right eye, on the combined image is observed by the right eye of the user, and the region, of the parallax image for a left eye of the user, on the combined image is observed by the left eye of the user.

At this time, if, for example, there is audio accompanying the left and right parallax images, the display device 11 causes the accompanying audio to be output from a speaker, not shown, in accordance with the display of the combined image.

In step S21, the display device 11 determines whether or not to turn off the power of the display device 11. For example, if turning off of power is instructed by an operation of the user, it is determined that the power is to be turned off.

In the case it is determined in step S21 that the power is not to be turned off, the process returns to step S11, and the process described above is repeated. That is, assignment of the parallax image to a pixel in each channel in the block region is changed according to the movement of the viewpoint position of the user, and a combined image generated according to the new assignment is displayed.

On the other hand, in the case it is determined in step S21 that the power is to be turned off, the display device 11 stops the processing by each unit and turns off the power, and the display process is ended.

Also, in the case it is determined in step S15 that stereoscopic display is not possible, the assignment control unit 23 instructs the generation unit 25 to display a two-dimensional parallax image, and the process proceeds to step S22.

In step S22, the generation unit 25 displays a two-dimensional parallax image, according to the instruction from the assignment control unit 23. That is, the generation unit 25 reads the parallax image for a right eye or for a left eye from the recording unit 24, and supplies the parallax image which has been read out to the display control unit 26 as it is.

Then, the display control unit 26 supplies the parallax image supplied by the generation unit 25 to the display unit 27, and causes the parallax image to be displayed. At this time, for example, the barrier element 63 does not form a parallax barrier, and the display unit 27 displays the parallax image as it is. Moreover, also in a case the parallax barrier provided to the display unit 27 is a fixed type, the parallax image is two-dimensionally displayed (2D-displayed) by the display unit 27 displaying the parallax image as it is.

When the parallax image is displayed in step S22, the process then proceeds to step S21, and the process described above is performed.

Furthermore, in the case it is determined in step S13 that the eyes of the user are not detected, the detection unit 22 supplies a detection result to the effect that the eyes are not detected to the assignment control unit 23, and the process proceeds to step S23.

In step S23, the assignment control unit 23 determines whether or not a predetermined period of time has passed since a state where the eyes of the user are not detected was reached.

In the case it is determined in step S23 that a predetermined period of time has not passed, the process proceeds to step S22, and the process described above is performed. That is, a parallax image is two-dimensionally displayed on the display unit 27.

On the other hand, in the case it is determined in step S23 that a predetermined period of time has passed, the assignment control unit 23 controls the generation unit 25 in step S24 such that a state where no image is displayed is reached. The generation unit 25 stops supply of images to the display control unit 26, according to the control of the assignmentcontrolunit23. A state where no image is displayed on the display unit 27 is thereby reached. That is, a state where an image is erased is reached.

Additionally, in the case there is audio accompanying the parallax image, the reproduction of the audio may be continued while the image is erased, or the audio may also be erased. In this manner, in the case the eyes of the user are not detected for a predetermined period of time, it can be assumed that the user is not looking at the parallax image, and the power consumption may be suppressed by erasing the image.

When the state where the image is erased is reached in step S24, the process then proceeds to step S21, the process described above is performed, and the display process is ended.

The display device 11 calculates the viewing pixel and the viewing position for each block region in the manner described above based on the viewpoint position of the user, and assigns the parallax image for a right eye or for a left eye to a pixel in each channel in the block region based on the calculation result to thereby generate a combined image.

At this time, by assigning the same parallax image, of the parallax images for a right eye and for a left eye, to at least two pixels adjacent to each other in the block region in the x direction, occurrence of cross talk may more easily suppressed, and an image of a higher quality may be presented.

Also, by changing the assignment of the parallax image to a pixel in each channel in the block region according to the movement of the viewpoint position of the user, switching of the parallax image in each channel may be prevented from being felt by the user, and a more natural image with a high quality may be presented.

Additionally, it has been described with respect to the display process described above that region information for identifying a region where stereoscopic display is possible is stored in advance in the determination unit 32, but the region information does not have to be stored in advance, and whether stereoscopic display is possible may be determined based on the calculation result for a viewing pixel.

In this case, the determination unit 32 uses the calculation result for a viewing pixel in each block region calculated by the viewing position calculation unit 33. That is, in the case there is a block region where the viewing pixel based on a right eye and the viewing pixel based on a left eye are the pixel in the same channel, the determination unit 32 determines that stereoscopic display is not possible.

### <Example Modification 1>

Furthermore, it has been described above that the display device 11 singly performs stereoscopic display by the semi-viewing distance display method, but the stereoscopic display by the semi-viewing display method may be performed by a display system including a plurality of devices.

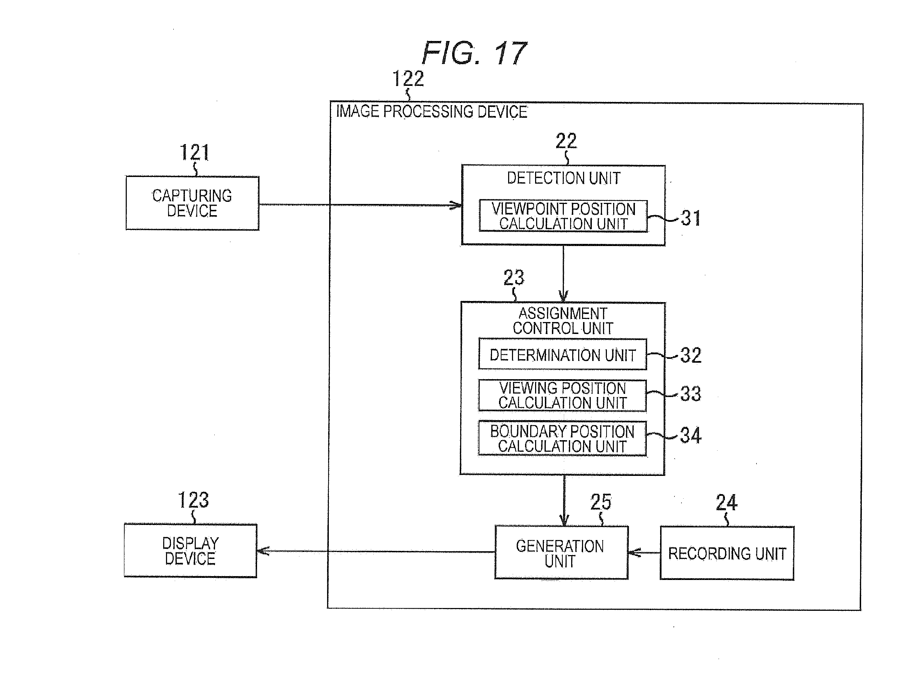

In this case, the display system is configured as shown in Fig. 17, for example.

That is, the display system in Fig. 17 is configured from a capturing device 121, an image processing device 122, and a display device 123. Additionally, in Fig. 17, parts corresponding to those in Fig. 1 are denoted with the same reference signs, and description thereof are omitted as appropriate.

The capturing device 121 captures an image of the surrounding of the display device 123 as a peripheral image, and supplies the peripheral image to the image processing device 122. The image processing device 122 generates a combined image using the peripheral images from the capturing device 121, and supplies the combined image to the display device 123.

The image processing device 122 is configured from a detection unit 22, an assignment control unit 23, a recording unit 24, and a generation unit 25. The detection unit 22 detects the eyes of a user from the peripheral image from the capturing device 121, and supplies the detection result to the assignment control unit 23, and the assignment control unit 23 assigns a parallax image to a pixel in each channel in a block region based on the detection result from the detection unit 22.

Also, the generation unit 25 generates a combined image from the parallax images for left and right eyes stored in the recording unit 24, according to the control of the assignment control unit 23, and supplies the combined image to the display device 123.

For example, the display device 123 is a display device having the same functions as the display unit 27 and the display control unit 26 and capable of displaying a stereoscopic image, and stereoscopically displays a subject on the parallax images based on the combined image supplied by the generation unit 25.

### <Example Modification 2>

Furthermore, a case where the display unit 27 is a display device capable of stereoscopically displaying a 4-viewpoint parallax image has been described above as an example, but the display unit 27 may be a display device capable of stereoscopically displaying a parallax image with five or more viewpoints.

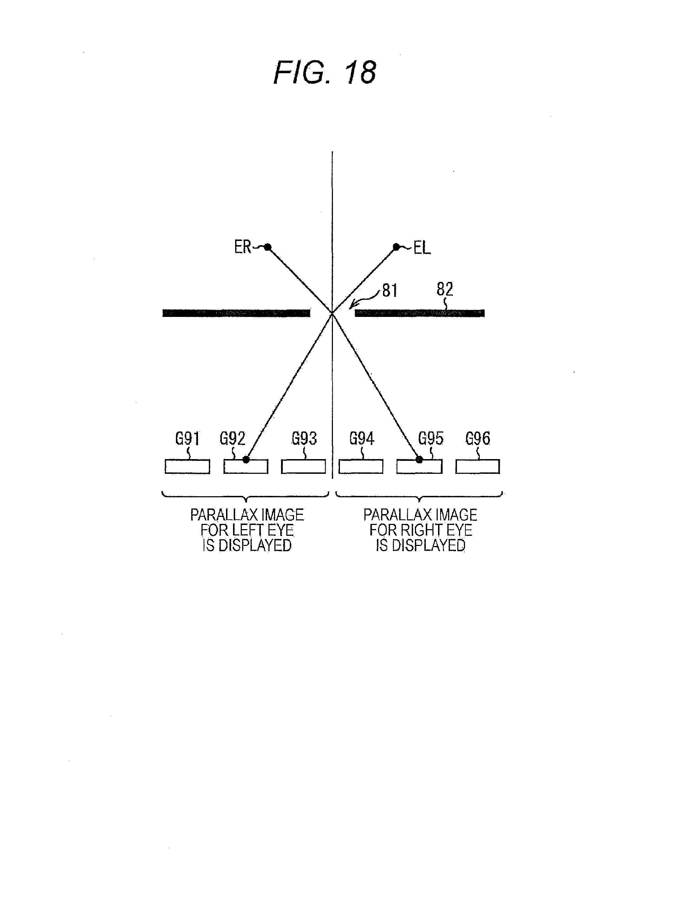

For example, as shown in Fig. 18, in the case the display unit 27 is capable of stereoscopically displaying 6-viewpoint parallax image, a region including pixels in six different channels is made a block region, and one opening portion 81 is provided for the block region. Additionally, in Fig. 18, parts corresponding to those in Fig. 3 are denoted with the same reference signs, and description thereof is omitted as appropriate.

In the example in Fig. 18, a region including pixels G91 to G96 in six different channels is taken as one block region.

In this case, the viewpoint position of the user capable of stereoscopically viewing the parallax images is at a position according to which pixels that are three pixels away from each other are the viewing pixels based on the right and left eyes of the user. In the example in Fig. 18, the pixel G95 is being viewed by the right eye ER of the user, and the pixel G92 is being viewed by the left eye EL of the user.

Also, at the time of assignment of a parallax image, the parallax image for a right eye or for a left eye is assigned to pixels in at least three continuous channels. For example, in Fig. 18, the parallax image for a left eye is assigned to the pixels G91 to G93, and the parallax image for a right eye is assigned to the pixels G94 to G96.

As described, with a display unit capable of stereoscopically displaying a multi-viewpoint parallax image, the parallax image for the same viewpoint may be assigned to two or more pixels arranged next to each other in the parallax direction by causing the viewing pixels for the right eye and the left eye to be pixels that are separated from each other by at least two pixels. Occurrence of cross talk may thereby be suppressed, and a parallax image with a higher quality may be presented.

The series of processes described above may be carried out by hardware, or by software. In the case of carrying out the series of processes by software, programs configuring the software are installed from a program recording medium to a computer embedded in dedicated hardware or, for example, a general-purpose personal computer capable of executing various functions by installing various programs.

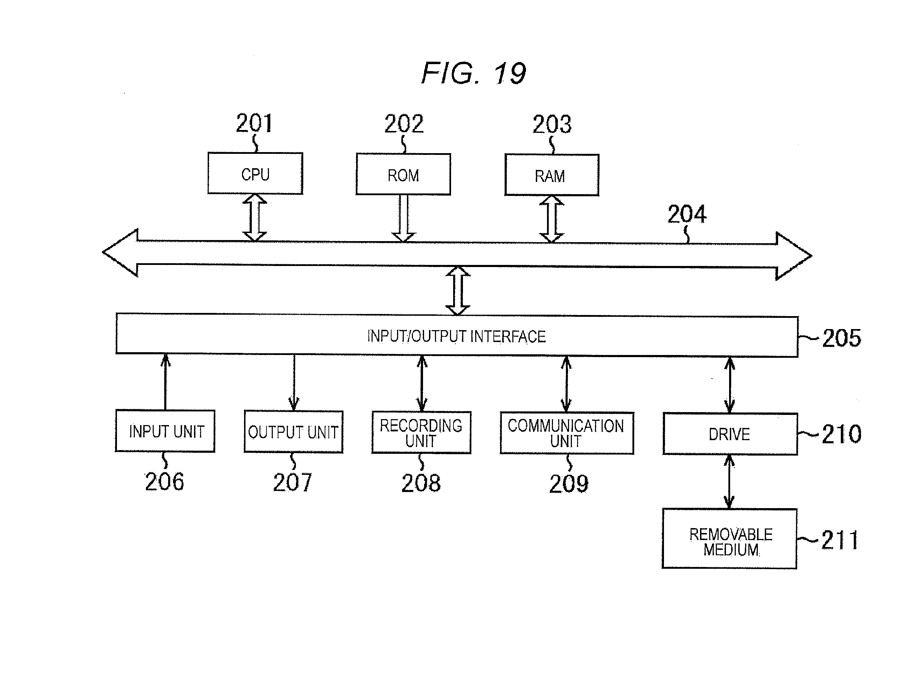

Fig. 19 is a block diagram showing an example configuration of hardware of a computer for executing the series of processes described above according to a program.

In the computer, a CPU (Central Processing Unit) 201, a ROM (Read Only Memory) 202, a RAM (Random Access Memory) 203 are interconnected by a bus 204.

An input/output interface 205 is also connected to the bus 204. An input unit 206 including a keyboard, a mouse, amicrophone and the like, an output unit 207 including a display, a speaker and the like, a recording unit 208 including a hard disk, a non-volatile memory and the like, a communication unit 209 including a network interface and the like, and a drive 210 for driving a removable medium 211 such as a magnetic disk, an optical disk, amagneto-optical disk, a semiconductor memory or the like, are connected to the input/output interface 205.

According to the computer configured in the manner above, the series of processes described above is performed by the CPU 201 loading, on the RAM 203 via the input/output interface 205 and the bust 204, and executing a program stored in the recording unit 208, for example.

A program to be executed by the computer (the CPU 201) is provided by being stored in the removable medium 211 which is a packaged media including a magnetic disk (including a flexible disk), an optical disk (a CD-ROM (Compact Disc-Read Only Memory), a DVD (Digital Versatile Disc), etc.), a magneto-optical disk, or a semiconductor memory, for example, or is provided via a wired or wireless transmission medium such as a local area network, the Internet, or digital satellite broadcasting.

Then, the programmay be installed, via the input/output interface 205, on the recording unit 208 by mounting the removable medium 211 on the drive 210. Also, the program may be installed on the recording unit 208 by being received by the communication unit 209 via a wired or wireless transmission medium. Alternatively, the program may be installed in advance in the ROM 202 or the recording unit 208.

Additionally, the program to be executed by the computer may be a program where processes are performed in time series in the order described in the present specification, or a program where processes are performed in parallel or at a necessary timing such as when the program is called up.

Furthermore, the embodiment of the present technology is not limited to the embodiment described above, and various modifications are possible within the scope of the present technology.

Furthermore, the present technology may also be configured in the following manner.
[1]
   A display device including:
   a display unit provided with a plurality of block regions including pixels in three or more channels;
   a separation unit for separating an image displayed in the pixel in each channel in the block region;
   an assignment control unit for assigning one of a plurality of parallax images to the pixel in each channel in the block region according to a viewpoint position of a user observing the display unit, such that a parallax image is displayed in a first region including a plurality of pixels that are adj acent to one another in the block region, the pixels being in two or more different channels, and such that another parallax image having a parallax to the parallax image is displayed in a second region in the block region, the second region being different from the first region; and
   a generation unit for generating a combined image by combining a plurality of parallax images according to assignment by the assignment control unit.
[2] The display device according to [1], wherein the plurality of parallax images are the parallax image for a right eye and the parallax image for a left eye.
[3] The display device according to [2], wherein, in a case the user observes the display unit from a predetermined viewpoint position, a pixel in a different channel is observed depending on the block region.
[4]
   The display device according to [3],
   wherein the assignment control unit includes
   a viewing position calculation unit for obtaining, for each block region, a viewing position on a viewing pixel in the block region observed by the user, based on the viewpoint position, and
   a boundary position calculation unit for calculating, as a boundary position, a position of the block region where the viewing position is substantially at a center of the viewing pixel, and for assigning, with respect to block regions present between the boundary position and another boundary position closest to the boundary position, a same parallax image to pixels in a same channel in the block regions.
[5] The display device according to [4], wherein the boundary position calculation unit assigns, with respect to the block regions present between the boundary position and the other boundary position, the same parallax image to pixels in a channel of the viewing pixel in the block region at the boundary position and in a channel, same as the channel of the viewing pixel, in the block region at the other boundary position.
[6] The display device according to [4] or [5], wherein the boundary position calculation unit takes a middle position of the boundary position calculated based on a right eye of the user and the boundary position calculated based on a left eye of the user as a final boundary position.
[7] The display device according to [2] or [4], wherein, in a case the viewpoint position is outside a predetermined region, the assignment control unit causes the display unit to display one of the parallax images for a right eye and for a left eye.

### REFERENCE SIGNS LIST

11 Display device, 21 Capturing unit, 22 Detection unit, 23 Assignment control unit, 25 Generation unit, 26 Display control unit, 27 Display unit, 31 Viewpoint position calculation unit, 32 Determination unit, 33 Viewing position calculation unit, 34 Boundary position calculation unit, 81-1 to 81-3, 81 Opening portion

## Claims

1. A display device comprising:
a display unit provided with a plural ity of block regions including pixels in three or more channels;
a separation unit for separating an image displayed in the pixel in each channel in the block region;
an assignment control unit for assigning one of a plurality of parallax images to the pixel in each channel in the block region according to a viewpoint position of a user observing the display unit, such that a parallax image is displayed in a first region including a plurality of pixels that are adj acent to one another in the block region, the pixels being in two or more different channels, and such that another parallax image having a parallax to the parallax image is displayed in a second region in the block region, the second region being different from the first region; and
a generation unit for generating a combined image by combining a plurality of parallax images according to assignment by the assignment control unit.

2. The display device according to claim 1, wherein the plurality of parallax images are the parallax image for a right eye and the parallax image for a left eye.

3. The display device according to claim 2, wherein, in a case the user observes the display unit from a predetermined viewpoint position, a pixel in a different channel is observed depending on the block region.

4. The display device according to claim 3,
wherein the assignment control unit includes
a viewing position calculation unit for obtaining, for each block region, a viewing position on a viewing pixel in the block region observed by the user, based on the viewpoint position, and
a boundary position calculation unit for calculating, as a boundary position, a position of the block region where the viewing position is substantially at a center of the viewing pixel, and for assigning, with respect to block regions present between the boundary position and another boundary position closest to the boundary position, a same parallax image to pixels in a same channel in the block regions.

5. The display device according to claim 4, wherein the boundary position calculation unit assigns, with respect to the block regions present between the boundary position and the other boundary position, the same parallax image to pixels in a channel of the viewing pixel in the block region at the boundary position and in a channel, same as the channel of the viewing pixel, in the block region at the other boundary position.

6. The display device according to claim 5, wherein the boundary position calculation unit takes a middle position of the boundary position calculated based on a right eye of the user and the boundary position calculated based on a left eye of the user as a final boundary position.

7. The display device according to claim 4, wherein, in a case the viewpoint position is outside a predetermined region, the assignment control unit causes the display unit to display one of the parallax images for a right eye and for a left eye.

8. A display method of a display device including:
a display unit provided with a plurality of block regions including pixels in three or more channels,
a separation unit for separating an image displayed in the pixel in each channel in the block region,
an assignment control unit for assigning one of a plurality of parallax images to the pixel in each channel in the block region according to a viewpoint position of a user observing the display unit, such that a parallax image is displayed in a first region including a plurality of pixels that are adjacent to one another in the block region, the pixels being in two or more different channels, and such that another parallax image having a parallax to the parallax image is displayed in a second region in the block region, the second region being different from the first region, and
a generation unit for generating a combined image by combining a plurality of parallax images according to assignment by the assignment control unit,
the display method comprising:
assigning, by the assignment control unit, a parallax image to the pixel in each channel in the block region; and
generating, by the generation unit, the combined image.

9. A program for causing a computer for controlling a display device including a display unit provided with a plurality of block regions including pixels in three or more channels and a separation unit for separating an image displayed in the pixel in each channel in the block region to execute:
assigning one of a plurality of parallax images to the pixel in each channel in the block region according to a viewpoint position of a user observing the display unit, such that a parallax image is displayed in a first region including a plurality of pixels that are adjacent to one another in the block region, the pixels being in two or more different channels, and such that another parallax image having a parallax to the parallax image is displayed in a second region in the block region, the second region being different from the first region; and
generating a combined image by combining a plurality of parallax images according to the assigning.
